# EUROPEAN PATENT APPLICATION

(11) **EP 4 804 025 A1**
(43) Date of publication of application: **09.09.2026**
(21) Application number: 24892775.8
(22) Date of filing: 21.06.2024
(51) Int. Cl.: G06F 9/50

(54) **METHOD AND APPARATUS FOR PROCESSING INPUT/OUTPUT REQUEST, AND ELECTRONIC DEVICE**

(30) Priority: 22.11.2023 CN 202311574759
(71) Applicant: Huawei Technologies Co., Ltd., Shenzhen, Guangdong 518129 (CN)
(72) Inventor: HAN, Peng, Shenzhen, Guangdong 518129 (CN); YANG, Hanbo, Shenzhen, Guangdong 518129 (CN)
(74) Representative: Körber, Martin Hans
(86) International application number: PCT/CN2024/100571
(87) International publication number: WO 2025/107610

(57) **Abstract**

This application discloses an input/output request processing method and apparatus, and an electronic device, and belongs to the field of electronic device technologies. The method is applied to the electronic device. A first execution environment in the electronic device includes a first worker thread pool. The first worker thread pool communicates, through a first task queue and a first result queue, with a first application that runs in a second execution environment in the electronic device. The first worker thread pool includes a plurality of worker threads used to process input/output I/O requests in the first task queue. The method includes: The worker threads in the first worker thread pool respectively obtain the I/O requests from the first task queue; and for a first I/O request obtained by a first worker thread in the first worker thread pool, the first worker thread executes the first I/O request, and writes an obtained first request result into the first result queue. According to the method in this application, efficiency of processing the I/O requests by the first application in the second execution environment in the electronic device through the first execution environment can be improved.

## Description

This application claims priority to Chinese Patent Application No. 202311574759.6, filed on November 22, 2023 and entitled "INPUT/OUTPUT REQUEST PROCESSING METHOD AND APPARATUS, AND ELECTRONIC DEVICE", which is incorporated herein by reference in its entirety.

### TECHNICAL FIELD

This application relates to the field of electronic device technologies, and in particular, to an input/output request processing method and apparatus, and an electronic device.

### BACKGROUND

With development and application of internet technologies, user data faces more security threats (such as network attacks). In view of this, current electronic devices generally support running of a trusted execution environment (trusted execution environment, TEE). Important data is loaded and processed in the TEE, so that it is possible to ensure the security of user data in an initial state and the runtime security of an authorized application that processes the important data.

The TEE is an execution environment isolated from a rich execution environment (rich execution environment, REE) in an electronic device. The REE, also referred to as a normal operating environment, generally provides rich functions but low security. The REE is usually used to run an operating system and a client application (client application, CA) (for example, a social application) of the electronic device. Compared with the REE, the TEE has fewer functions but a high security level, and is generally used as an execution environment for an operation (for example, fingerprint recognition, password processing, data encryption/decryption, or security authentication) that requires confidentiality. Therefore, an application running in the TEE is referred to as an authorized application or a trusted application (Trusted Application, TA).

Currently, in an electronic device that supports a TEE and an REE, an input/output (input/output, I/O) resource (for example, a disk or a network adapter) of the electronic device is directly accessed and used in the REE. However, when executing an I/O request, a TA in the TEE needs to execute the I/O request through the REE. Therefore, how to improve efficiency of executing the I/O request by the TEE through the REE becomes a technical problem to be urgently resolved.

### SUMMARY

This application provides an input/output request processing method and apparatus, and an electronic device. According to the method provided in this application, efficiency of processing an I/O request by an application in a second execution environment in the electronic device through a first execution environment can be improved.

Technical solutions provided in this application are as follows.

According to a first aspect, this application provides an input/output (input/output, I/O) request processing method, where the method is applied to an electronic device, a first execution environment in the electronic device includes a first worker thread pool, the first worker thread pool communicates, through a first task queue and a first result queue, with a first application that runs in a second execution environment in the electronic device, the first task queue is used to store I/O requests of the first application, the first result queue is used to store request results of the I/O requests, and the first worker thread pool includes a plurality of worker threads used to process the I/O requests in the first task queue. The method includes: The worker threads in the first worker thread pool respectively obtain the I/O requests from the first task queue; for a first I/O request obtained by a first worker thread in the first worker thread pool from the first task queue, the first worker thread executes the first I/O request, to obtain a first request result; and the first worker thread writes the first request result into the first result queue. The first worker thread is any worker thread that obtains an I/O request and that is in the first worker thread pool.

According to the method provided in this application, the plurality of worker threads in the first worker thread pool in the first execution environment in the electronic device process the I/O requests of the first application that runs in the second execution environment in the electronic device. In this way, efficiency of processing the I/O requests by the first application in the second execution environment through the first execution environment can be improved. In addition, because both the first execution environment and the second execution environment run in the electronic device, in an execution process of the method provided in this application, the electronic device does not need to frequently invoke instructions to switch between the first execution environment and the second execution environment. In this way, resource overheads required for switching the execution environment can be reduced, so that performance of the electronic device is ensured.

In a possible design manner, the first execution environment in the electronic device further includes a second worker thread pool, the second worker thread pool communicates with a second application in the second execution environment through a second task queue and a second result queue, the second task queue is used to store I/O requests of the second application, the second result queue is used to store request results of the I/O requests of the second task queue, the second worker thread pool includes a plurality of worker threads, and the worker threads in the second worker thread pool are used to: process the I/O requests in the second task queue, and write obtained results into the second result queue.

According to the possible design, in the method provided in this application, corresponding worker thread pools in the first execution environment are respectively created for different applications (for example, the first application and the second application) in the second execution environment. In this way, a plurality of worker threads that correspond to each application in the second execution environment and that are located in the worker thread pool in the first execution environment may concurrently process I/O requests of the application. In other words, in this application, concurrent processing of I/O requests of a plurality of applications in the second execution environment is supported in the first execution environment. Therefore, according to the method provided in this application, efficiency of processing the I/O requests of the plurality of applications in the second execution environment through the first execution environment is improved.

In another possible design manner, the first execution environment in the electronic device further includes a detection thread corresponding to the first worker thread pool, and before the worker threads in the first worker thread pool respectively obtain the I/O requests from the first task queue, the method further includes: A worker thread that is in the first worker thread pool and whose state is a sleep state receives a wake-up instruction sent by the detection thread; and the worker thread that is in the first worker thread pool and whose state is the sleep state switches from the sleep state to a ready state in response to the wake-up instruction. In this case, that the worker threads in the first worker thread pool respectively obtain the I/O requests from the first task queue includes: The worker thread that is in the first worker thread pool and whose state is switched from the sleep state to the ready state separately obtains an I/O request from the first task queue. The detection thread is used to: detect whether the first task queue is empty; when detecting that the first task queue is not empty, determine whether a worker thread in the sleep state exists in the first worker thread pool; and when determining that the worker thread in the sleep state exists in the first worker thread pool, send the wake-up instruction to the worker thread in the sleep state in the first worker thread pool.

According to the possible design, it indicates that the worker thread that is in the first execution environment and that is used to process the I/O request is in a sleep state when the worker thread is not executing the I/O request. In this way, resources in the electronic device can be saved when the worker thread is idle.

In still another possible design manner, when no worker thread in the sleep state exists in the first worker thread pool, the detection thread is further used to create a first preset quantity of worker threads in the first worker thread pool. In this case, that the worker threads in the first worker thread pool respectively obtain the I/O requests from the first task queue includes: A newly created worker thread in the first worker thread pool separately obtains an I/O request from the first task queue.

According to the possible design, when a quantity of I/O requests of the first application in the second execution environment is large, a new worker thread is created in the first execution environment in time, so that efficiency of processing the I/O requests of the first application in the second execution environment is improved.

In still another possible design manner, when the detection thread is used to periodically detect whether the first task queue is empty, the detection thread is further used to detect, in each period, frequency of writing the I/O requests into the first task queue, to obtain a detection result of each period, where the detection result is used to adjust period duration for detecting, by the detection thread, whether the first task queue is empty.

According to this possible design, the period duration for detecting whether the first task queue is empty can be adjusted in time based on the frequency of writing the I/O requests into the first task queue. For example, when the frequency of writing the I/O request into the first task queue is high, the period duration for detecting whether the first task queue is empty is reduced. For another example, when the frequency of writing the I/O requests into the first task queue is low, the period duration for detecting whether the first task queue is empty is increased. In this way, efficiency of processing the I/O requests in the first task queue can be ensured, and occupation of resources in the electronic device by the detection thread used to detect whether the first task queue is empty can be further effectively reduced.

In still another possible design manner, the detection thread is further used to: when detecting that the first task queue is empty, destroy a second preset quantity of worker threads that are in the first worker thread pool and that are in the sleep state.

According to this possible design, a redundant worker thread in the first worker thread pool is destroyed in time when no I/O request exists in the first task queue. In this way, occupation of resources in the electronic device by the worker threads can be effectively reduced.

In still another possible design manner, after the first worker thread writes the first request result into the first result queue, or after the first worker thread writes the first request result into the first result queue and when the first worker thread obtains, while receiving status information that is returned by the first task queue and that indicates that the queue is empty, the I/O requests from the first task queue again, the method further includes: The first worker thread sets a status of the first worker thread to the sleep state.

According to this possible design, an idle worker thread that has processed the I/O requests enters the sleep state, so that occupation of resources in the electronic device by the worker threads can be reduced.

In still another possible design manner, the I/O requests of the first application include disk I/O requests. In this case, the first task queue is used to store the disk I/O requests of the first application.

In still another possible design manner, the I/O requests of the first application further include network I/O requests. In this case, the first execution environment in the electronic device further includes a third worker thread pool, the third worker thread pool communicates with the first application through a third task queue and a third result queue, the third task queue is used to store the network I/O requests of the first application, the third result queue is used to store request results of the network I/O requests in the third task queue, the third worker thread pool includes a plurality of worker threads, and the worker threads in the third worker thread pool are used to: process the network I/O requests in the third task queue, and write obtained request results into the third result queue.

According to the foregoing two possible designs, efficiency of processing the disk I/O requests and the network I/O requests of the application in the second execution environment by using the worker thread in the first execution environment can be improved.

In still another possible design manner, a security level of the first execution environment in the electronic device is different from a security level of the second execution environment.

In still another possible design manner, the first execution environment in the electronic device is a rich execution environment (rich execution environment, REE), and the second execution environment is a trusted execution environment (trusted execution environment, TEE).

According to a second aspect, this application provides an I/O request processing method, where the method is applied to an electronic device, a first application runs in a second execution environment in the electronic device, the first application communicates with a first execution environment in the electronic device through a first task queue and a first result queue, the first task queue is used to store I/O requests of the first application, and the first result queue is used to store request results of the I/O requests in the first task queue. The method includes: The first application writes a first I/O request into the first task queue; and the first application obtains a first request result of the first I/O request from the first result queue. The first I/O request is any I/O request written by the first application into the first task queue, and the first request result is a request result obtained after a worker thread pool that is in the first execution environment and that corresponds to the first application processes the first I/O request.

In a possible design manner, a second application further runs in the second execution environment in the electronic device, the second application communicates with the first execution environment through a second task queue and a second result queue, the second task queue is used to store I/O requests of the second application, the second result queue is used to store request results of the I/O requests in the second task queue, and the request results are request results obtained after worker threads in a worker thread pool that is in the first execution environment and that corresponds to the second application process the I/O requests in the second task queue.

In still another possible design manner, the I/O requests of the first application include disk I/O requests. In this case, the first task queue is used to store the disk I/O requests of the first application.

In still another possible design manner, the I/O requests of the first application further include network I/O requests. In this case, the first application further communicates with the first execution environment through a third task queue and a third result queue, the third task queue is used to store the network I/O requests of the first application, the third result queue is used to store request results of the network I/O requests in the third task queue, and the request results are request results obtained after the worker threads in the worker thread pool that is in the first execution environment and that corresponds to the first application process the I/O requests in the third task queue.

In still another possible design manner, a security level of the first execution environment in the electronic device is different from a security level of the second execution environment.

In still another possible design manner, the first execution environment in the electronic device is an REE, and the second execution environment is a TEE.

In still another possible design manner, after the first application writes the first I/O request into the first task queue, the method further includes: receiving a first identifier (identifier, ID) that is of the first I/O request and that is returned by the first task queue. In this case, that the first application obtains the first request result of the first I/O request from the first result queue includes: determining, as the first request result, a request result that is in the request result obtained from the first result queue and that includes the first ID. Each request result in the first result queue includes an ID of an I/O request from which each request result is obtained.

It should be understood that for descriptions of beneficial effects of any method provided in the second aspect, refer to descriptions of beneficial effects of a corresponding method provided in the first aspect. Details are not described again.

According to a third aspect, this application further provides an I/O request processing apparatus.

In a possible design manner, the processing apparatus is configured to perform any method provided in the first aspect. In this application, the processing apparatus may be divided into functional modules according to any method provided in the first aspect. For example, each functional module may be obtained through division based on each corresponding function, or two or more functions may be integrated into one processing module. For example, in this application, the processing apparatus may be divided into an obtaining unit, an execution unit, a writing unit, and the like based on functions. For descriptions of possible technical solutions performed by the functional modules obtained through division and beneficial effect, refer to the technical solutions provided in the first aspect or the corresponding possible designs of the first aspect. Details are not described herein again.

In another possible design manner, the processing apparatus is configured to perform any method provided in the second aspect. In this application, the processing apparatus may be divided into functional modules according to any method provided in the second aspect. For example, each functional module may be obtained through division based on each corresponding function, or two or more functions may be integrated into one processing module. For example, in this application, the processing apparatus may be divided into a writing unit, an obtaining unit, and the like based on functions. For descriptions of possible technical solutions performed by the functional modules obtained through division and beneficial effect, refer to the technical solutions provided in the second aspect or the corresponding possible designs of the second aspect. Details are not described herein again.

In still another possible design manner, the processing apparatus includes a first processing unit and a second processing unit. The first processing unit is configured to: run a first execution environment, and perform any method provided in any possible design manner of the first aspect. The second processing unit is configured to: run a second execution environment, and perform any method provided in any possible design manner of the second aspect.

In still another possible design manner, the processing apparatus includes one or more processors, a memory, and a communication interface. The one or more processors receive or send data through the communication interface. The one or more processors are configured to invoke program instructions stored in the memory, so that the processing apparatus performs any method provided in any one of the first aspect and/or the possible design manners of the second aspect.

According to a fourth aspect, this application provides an electronic device, including one or more processors and a memory. The one or more processors are configured to: read first program instructions in the memory, to run a first execution environment, and perform any method provided in any possible design manner of the first aspect. The one or more processors are further configured to: read second program instructions in the memory, to run a second execution environment, and perform any method provided in any possible design manner of the second aspect.

According to a fifth aspect, this application provides a computer-readable storage medium, where the computer-readable storage medium is a non-volatile computer-readable storage medium, the computer-readable storage medium includes program instructions, and when the program instructions are run on a computer or a processor, the computer or the processor is enabled to perform the method provided in any possible implementation of the first aspect and/or the second aspect of this application.

According to a sixth aspect, this application provides a computer program product including instructions. When the computer program product runs on a computer or a processor, the computer or the processor is enabled to perform the method provided in any possible implementation of the first aspect and/or the second aspect of this application.

According to a seventh aspect, this application provides a chip, where the chip includes a processor, a first execution environment and a second execution environment run in the processor, and the processor is configured to: perform, in the first execution environment, the method provided in any possible implementation of the first aspect, and perform, in the second execution environment, the method provided in any possible implementation of the second aspect.

For example, the chip further includes an input interface, an output interface, and a memory. The input interface, the output interface, the processor, and the memory are connected through an internal connection path. The memory is configured to: store program instructions or code for implementing the method provided in any possible implementation of the first aspect and/or the second aspect, and store I/O requests and request results of the I/O requests.

It may be understood that any apparatus, electronic device, computer-readable storage medium, computer program product, or the like provided above may be applied to the corresponding method provided above. Therefore, for beneficial effects that can be achieved, refer to the beneficial effects in the corresponding method. Details are not described herein again.

In this application, a name of the I/O request processing apparatus does not constitute a limitation on devices or functional modules. During actual implementation, these devices or functional modules may have other names. The devices or the functional modules fall within the protection scope of this application, provided that functions of the devices or the functional modules are similar to those in this application.

### BRIEF DESCRIPTION OF DRAWINGS

FIG. 1 is a diagram of a process in which a TA in a TEE executes I/O requests through an REE;
FIG. 2 is a diagram of a real-time environment of a method according to an embodiment of this application;
FIG. 3 is a diagram of a software framework of an electronic device according to an embodiment of this application;
FIG. 4 is a diagram of another software framework of an electronic device according to an embodiment of this application;
FIG. 5 is a diagram of still another software framework of an electronic device according to an embodiment of this application;
FIG. 6 is a schematic flowchart of an I/O request processing method according to an embodiment of this application;
FIG. 7 is another schematic flowchart of an I/O request processing method according to an embodiment of this application;
FIG. 8 is a diagram of a process in which a worker thread obtains an I/O request from a first task queue according to an embodiment of this application;
FIG. 9 is a diagram of a structure of an I/O request processing apparatus according to an embodiment of this application;
FIG. 10 is a diagram of a structure of another I/O request processing apparatus according to an embodiment of this application;
FIG. 11 is a diagram of a structure of still another I/O request processing apparatus according to an embodiment of this application; and
FIG. 12 is a diagram of a structure of an electronic device according to an embodiment of this application.

### DESCRIPTION OF EMBODIMENTS

To make the objectives, technical solutions, and advantages of this application clearer, the following further describes the implementations of this application in detail with reference to the accompanying drawings.

For ease of understanding, the following first explains technologies and the background in embodiments of this application.

### (1) Shared memory (shared memory, SHM)

The shared memory is a very effective way to share and transfer data between a plurality of running processes (or threads), and is one of simple ways of communication between processes. In the shared memory, the plurality of processes (or threads) are allowed to access a same memory block. Specifically, the plurality of processes (or threads) map a physical address of a same memory block to respective logical address space. In this way, all the plurality of processes (or threads) can access the memory block, and the memory block is a shared memory used to implement communication between the plurality of processes (or threads).

### (2) Daemon process

The daemon (daemon) process is a special process that runs in the background and is used to perform a specific system task. Some daemon processes are started when a system boots and run until the system shuts down. Other daemon processes start only when necessary and end automatically after a task is complete.

### (3) Disk input/output (input/output, I/O) and network I/O

Disk I/O refers to read and write operations on a disk. Network I/O refers to operations of receiving and sending data through a network interface/communication interface.

### (4) Client application (client application, CA) and trusted application (Trusted Application, TA)

The CA is an upper-layer application in a rich execution environment (rich execution environment, REE), for example, a social application or an electronic mall application. The TA is an application that completes a specific task in a trusted execution environment (trusted execution environment, TEE), for example, fingerprint recognition, password processing, data encryption/decryption, or security authentication. Because a security level of the TEE is higher than that of the REE, the TA that completes computing in the TEE has a high security level.

In an example, each TA in the TEE corresponds to one or more CAs in the REE. For example, payment operations need to be performed for both a social application (denoted as a CA 1) and an electronic mall application (denoted as a CA 2) that support a payment function and that are in the REE, and payment password processing (denoted as a TA 1) during payment operation execution is generally performed in the TEE. In other words, two CAs (CA 1 and CA 2) in the REE correspond to one TA (TA 1) in the TEE.

In another example, each CA in the REE corresponds to one or more TAs in the TEE. For example, for a social application (denoted as a CA 1) that supports a payment function and that is in the REE, payment password processing (denoted as a TA 1) performed when the social application performs a payment operation is performed in the TEE, and security authentication (denoted as a TA 2) performed when the social application logs in to a user account is also performed in the TEE. In other words, one CA (CA 1) in the REE corresponds to two TAs (TA 1 and TA 2) in the TEE.

In still another example, when a CA in the REE needs to perform a specific operation/task (like fingerprint recognition, password processing, data encryption/decryption, or security authentication) through the TEE in a running process, the CA may invoke a command word to indicate an operating system (operating system, OS) (denoted as a TEE OS) of the TEE to create, in the TEE, a process (or thread) for performing the specific operation/task, where the process (or thread) is a TA running in the TEE. In other words, in the running process, the CA in the REE may initiate a TA in the TEE at any time, to perform a specific operation/task (like fingerprint recognition, password processing, data encryption/decryption, or security authentication) that requires a high-security-level execution environment.

Currently, in an electronic device that supports a TEE and an REE, an I/O resource (for example, a hard disk or a network adapter) of the electronic device is directly accessed and used in the REE, but the I/O resource of the electronic device cannot be directly accessed in the TEE. Therefore, a TA in the TEE needs to execute I/O requests through the REE.

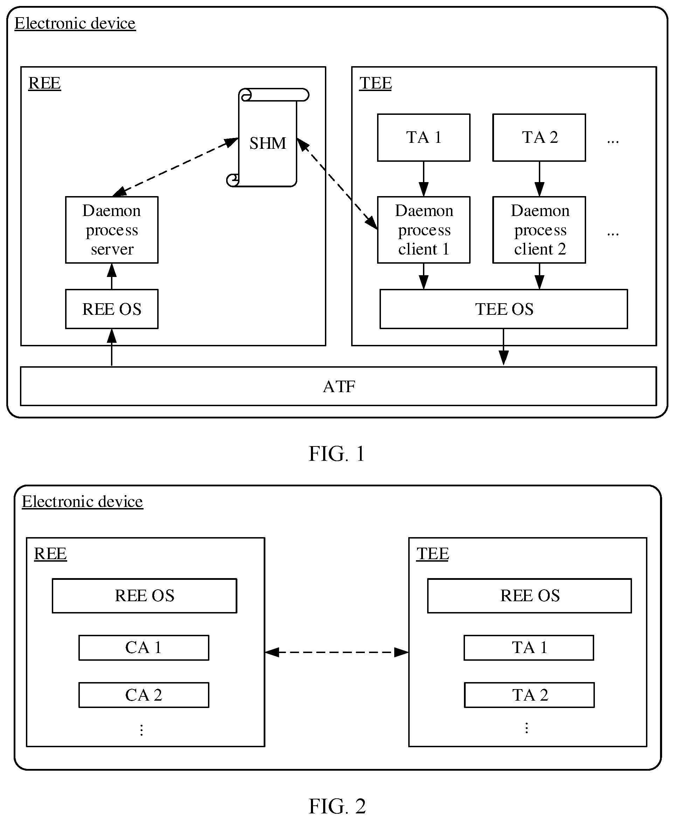

FIG. 1 is a diagram of a process in which a TA in a TEE executes I/O requests through an REE. As shown in FIG. 1, in an electronic device that supports a TEE and an REE, an operating system (operating system, OS) (denoted as a REE OS) of the REE creates and starts, in an initialization phase, a daemon process (denoted as a daemon process server) that functions as a server. Then, the daemon process server applies for a segment of memory to serve as an SHM for communication between the daemon process server and the TEE.

For example, for each TA that is on the TEE side and that performs a specific task (like fingerprint recognition, password processing, data encryption/decryption, or security authentication) for a CA in the REE, a TEE OS may create, for each TA, a daemon process (denoted as a daemon process client) that functions as a client. For example, as shown in FIG. 1, the TEE OS creates a daemon process client 1 for a TA 1, creates a daemon process client 2 for a TA 2, and the like. In this way, for a TA that executes a specific task for the CA, for example, the TA 1, when the TA 1 needs to execute I/O requests (the I/O requests are, for example, disk I/O requests for reading data from a local disk of the electronic device), the TA 1 may write the I/O requests into the SHM through the daemon process client 1, and switch the execution environment in the electronic device to the REE by invoking a secure monitor call (secure monitor call, smc) instruction, a supervisor call instruction (supervisor call instruction, svc), and the like in a trusted firmware (arm trusted firmware, ATF). It should be understood that the TEE and the REE herein reuse a physical resource of the electronic device for running in a time division manner. Therefore, when a task needs to be executed in the REE, the execution environment needs to be switched to the REE.

Further, the daemon process server in the REE obtains the I/O requests from the SHM, responds to execution of the I/O requests, and writes, into the SHM, request results (for example, data read by executing the disk I/O requests) obtained by executing the I/O requests. Then, the daemon process server of the REE switches the execution environment in the electronic device to the TEE by invoking an instruction like smc or svc in the ATF. In this way, the TA 1 in the TEE may obtain the request results from the SHM. In this way, the TA in the TEE executes the I/O requests through the REE.

However, in the conventional technology, the daemon process server in the REE is globally unique. Therefore, when a plurality of TAs in the TEE or a plurality of threads in one TA write I/O requests into the SHM, the daemon process server in the REE can only process the I/O requests written into the SHM one by one in a serial manner. Consequently, efficiency of executing the I/O requests by the TA in the TEE through the REE is very low. In addition, in the conventional technology, the instruction like smc or svc is invoked a plurality of times to switch between the TEE and the REE. Therefore, switching overheads are high, and performance of the electronic device is affected to some extent.

Based on this, an embodiment of this application provides an I/O request processing method. In the method, both a first execution environment and a second execution environment run in an electronic device. A first application runs in the second execution environment. When the first application needs to execute I/O requests, the first execution environment configures a first worker thread pool for the first application, and configures the first worker thread pool to communicate with the first application through a first SHM. The first SHM includes a first task queue and a first result queue, the first task queue is used to store the I/O requests of the first application, the first result queue is used to store request results of the I/O requests of the first application, and the first worker thread pool includes a plurality of worker threads used to process the I/O requests in the first task queue. In this way, the first application may write the I/O requests into the first task queue, and the worker threads in the first worker thread pool can respectively obtain the I/O requests from the first task queue, process the I/O requests, and write obtained request results into the first result queue. Further, the first application obtains the request results from the first result queue.

According to the method provided in this embodiment of this application, the plurality of worker threads in the first worker thread pool in the first execution environment process the I/O requests of the first application that runs in the second execution environment. In this way, efficiency of processing the I/O requests by the first application in the second execution environment through the first execution environment can be improved. In addition, because both the first execution environment and the second execution environment run in the electronic device, in an execution process of the method provided in this embodiment of this application, the electronic device does not need to frequently invoke an instruction like smc or svc to switch between the first execution environment and the second execution environment. In this way, resource overheads required for switching the execution environment can be reduced, so that performance of the electronic device is ensured.

Optionally, a security level of the first execution environment is different from a security level of the second execution environment. The first application is configured to execute a specific task of an application in the first execution environment, and the specific task is a service that needs to be processed in the second execution environment.

In some examples, the first execution environment is an REE, and the second execution environment is a TEE. In this case, the first application is configured to execute a specific task of any CA in the REE. The specific task generally has a high security level, and therefore needs to be processed in the TEE. For example, the specific task is a task like fingerprint recognition, password processing, data encryption/decryption, or security authentication.

Optionally, the electronic device may be any terminal device, computing platform, service platform, or the like in which the first execution environment and the second execution environment run. This is not limited herein. For example, the electronic device may be a terminal device like a mobile phone, a tablet computer, a notebook computer, a vehicle-mounted computer, a general-purpose computer, or a wearable device in which the first execution environment and the second execution environment run. This is not limited thereto. For another example, the electronic device may be a cloud computing device, a server, or the like in which the first execution environment and the second execution environment run. This is not limited thereto.

For brevity of description, in embodiments of this application, an example in which the first execution environment is an REE and the second execution environment is a TEE is used below for description.

FIG. 2 is a diagram of a real-time environment of a method according to an embodiment of this application. As shown in FIG. 2, two execution environments, namely, an REE and a TEE, run in an electronic device. In the REE, at least one CA runs, for example, a CA 1 and a CA 2 shown in FIG. 2. In the TEE, at least one TA that executes a specific task for the CA in the REE runs, for example, a TA 1 and a TA 2 shown in FIG. 2. For descriptions of the specific task, refer to the foregoing descriptions, and details are not described again. It should be understood that when the TA 1 and the TA 2 in the TEE need to execute I/O requests, the I/O requests may be processed according to the I/O request processing method provided in this embodiment of this application.

In an example, the TA 1 and/or the TA 2 are/is trusted applications/a trusted application preset in the TEE, so that the TA 1 and/or the TA 2 are/is invoked when the CA in the REE needs to perform a specific task (for example, a data encryption service that has a high security level requirement).

In another example, the TA 1 and/or the TA 2 are/is modules/a module that have/has a high security level requirement and that are/is installed in the TEE in an APP when the application (application, APP) is installed on the electronic device. It should be understood that the APP does not require a module with a high security level to be installed in the REE of the electronic device. For example, for an electronic mall APP, a module for implementing commodity retrieval and browsing in the electronic mall APP is installed in the REE of the electronic device, and a module for implementing user account login and commodity payment in the electronic mall APP is installed in the TEE of the electronic device.

In still another example, the TA 1 and/or the TA 2 are/is TAs/a TA that are/is created by the TEE and that are/is used to execute a specific task (for example, a task like fingerprint recognition, password processing, data encryption/decryption, or security authentication that has a high security level requirement) when the CA in the REE of the electronic device needs to execute the specific task. For example, for an electronic mall APP, when an electronic mall CA running in the REE of the electronic device needs to log in to a user account in response to an operation of a user, the electronic mall CA may indicate the TEE of the electronic device to create a TA used for identity security authentication.

It should be understood that the foregoing content is an example description of an implementation environment of the method provided in this embodiment of this application, and does not constitute a limitation on the implementation environment of the method. A person of ordinary skill in the art may learn that as a service requirement changes, the implementation environment of the method may be adjusted based on an application requirement. This is not enumerated in this embodiment of this application.

An embodiment of this application further provides an I/O request processing apparatus. The apparatus is applied to any electronic device in which an REE and a TEE run, and the apparatus is configured to perform the I/O request processing method provided in embodiments of this application. Optionally, the apparatus may be any electronic device in which an REE and a TEE run, or a functional module of an electronic device in which an REE and a TEE run. This is not limited herein. For descriptions of the electronic device, refer to the foregoing descriptions. Details are not described again.

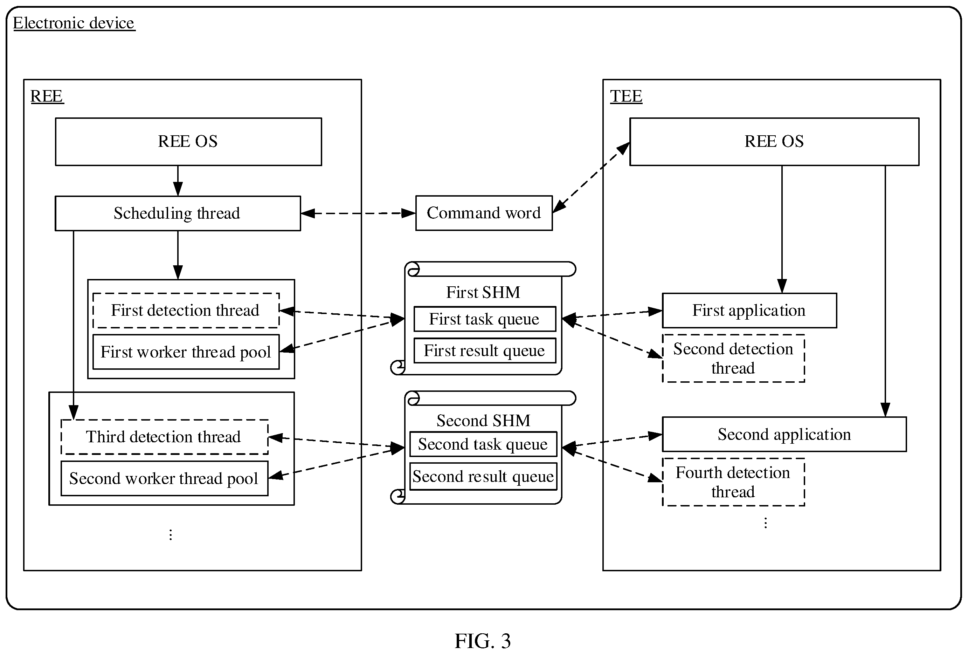

FIG. 3 is a diagram of a software framework of an electronic device according to an embodiment of this application.

As shown in FIG. 3, a REE OS of the electronic device includes a resident scheduling thread. For any TA running in a TEE OS of the electronic device, for example, a first application, in a process in which the first application executes a specific task of any CA in a REE, when the first application needs to execute I/O requests, the first application sends, to the scheduling thread in the REE OS, a communication request carrying an identifier (identifier, ID) of the first application. For example, the first application invokes a command word in notification data (notification data) through the TEE OS, to send the communication request to the scheduling thread of the first application. The ID of the first application may be a process ID of a process used to implement the first application, or a thread ID of a thread used to implement the first application. This is not limited thereto.

After the scheduling thread in the REE OS receives the communication request, in response, the scheduling thread creates, in the REE, a first worker thread pool including a preset quantity of worker threads for the first application, applies for a segment of memory (denoted as a first memory) of the electronic device, and creates a first task queue and a first result queue in the first memory. The first task queue is used to store the I/O requests of the first application. The worker threads in the first worker thread pool are used to process the I/O requests in the first task queue, and write obtained request results into the first result queue. In other words, the first result queue is used to store request results of the I/O requests in the first task queue. A value of the preset quantity is not specifically limited in this embodiment of this application, and specific structures/a specific structure of the first task queue and/or the first result queue are/is not specifically limited. For example, the first task queue and/or the first result queue may be a linear queue, a ring queue, or the like. This is not limited thereto. In addition, when the first task queue and the first result queue are created in the first memory, a specific ratio of a storage space corresponding to the first task queue to a storage space corresponding to the first result queue that are divided in the first memory is not limited in this embodiment of this application. For example, when creating the first task queue and the first result queue in the first memory, the scheduling thread uses a half of a storage space of the first memory as the storage space corresponding to the first task queue, and uses the other half of the storage space of the first memory as the storage space of the first result queue. This is not limited thereto.

Then, the scheduling thread sends, to each worker thread in the first worker thread pool and the first application, an address of the first memory in which the first task queue and the first task queue are created. In response, the worker thread in the first worker thread pool and the first application receive the address of the first memory. In this way, the first memory in which the first task queue and the first result queue are created may be used as an SHM, which is denoted as a first SHM, for communication between the first worker thread pool and the first application. In this way, the address of the first memory in which the first task queue and the first result queue are created is an address of the first SHM. For example, the scheduling thread may send the address of the first memory to each thread in the first worker thread pool by invoking a POSIX thread standard library (posix threads, pthread) function. Herein, POSIX refers to a portable operating system interface (portable operating system interface). In another example, the scheduling thread may send, based on the ID of the first application, the address of the first memory to the first application by invoking the command word in the notify data through the REE OS.

In some embodiments, the scheduling thread in the REE OS further creates, in the REE, a corresponding first detection thread (corresponding to a detection thread in this application) for the first SHM, where the first detection thread is used to detect a status of the first task queue in the first SHM and a status of the first result queue in the first SHM. For example, the first detection thread is used to: detect whether the first task queue in the first SHM is empty, and detect whether the first result queue in the first SHM is not full. In some examples, the first detection thread includes a first thread and a second thread, where the first thread is used to detect whether the first task queue in the first SHM is empty, and the second thread is used to detect whether the first result queue in the first SHM is not full. For detailed descriptions of detecting the status of the first task queue and the status of the first result queue by the first detection thread, refer to descriptions in the following method. Details are not described again.

In some other embodiments, after sending, to the scheduling thread in the REE OS, the communication request carrying the ID of the first application, the first application further creates a second detection thread in the TEE. In addition, after receiving the address of the first SHM (namely, the first memory), the first application sends the address of the first SHM to the second detection thread. In response, the second detection thread receives the address of the first SHM. Further, the second detection thread may be used to detect the status of the first task queue in the first SHM and the status of the first result queue in the first SHM. For example, the second detection thread is used to: detect whether the first task queue in the first SHM is not full, and detect whether the first result queue in the first SHM is not empty. In some examples, the second detection thread includes a third thread and a fourth thread, where the third thread is used to detect whether the first task queue in the first SHM is not full, and the fourth thread is used to detect whether the first result queue in the first SHM is not empty. For detailed descriptions of detecting the status of the first task queue and the status of the first result queue by the second detection thread, refer to descriptions in the following method. Details are not described again.

In the foregoing process, the first application and the second detection thread in the TEE can be associated with the first worker thread pool and the first detection thread in the REE through the first SHM. In this way, there is a correspondence between the first application and the second detection thread in the TEE and the first worker thread pool and the first detection thread in the REE that are associated through the first SHM.

In this embodiment of this application, the SHM, the TA and the detection thread in the TEE and the worker thread pool and the detection thread in the REE that are associated through the SHM may be referred to as a cross-domain cross-process trust (cross tasklet, xtasklet) framework. For example, the first SHM, the first application and the second detection thread in the TEE and the first worker thread pool and the first detection thread in the REE that are associated through the first SHM may be denoted as a first xtasklet framework. The method provided in this embodiment of this application is applied to the first xtasklet framework, so that the worker threads in the first worker thread pool in the REE can concurrently process the I/O requests of the first application in the TEE, and efficiency of processing the I/O requests of the first application in the TEE can be improved. For a specific process of implementing the method provided in this embodiment of this application in the first xtasklet framework, refer to the following method descriptions. Details are not described again.

Still refer to FIG. 3. Similarly, for any other TA running in the TEE OS of the electronic device, for example, a second application, in this embodiment of this application, when the second application needs to execute I/O requests, a second SHM may be applied for the second application in the electronic device, a second worker thread pool and a third detection thread are created in the REE, and a fourth detection thread is created in the TEE. The second application and the fourth detection thread in the TEE are associated with the second worker thread pool and the third detection thread in the REE through the second SHM, to obtain a second xtasklet framework. In this way, there is a correspondence between the second application and the fourth detection thread in the TEE and the second worker thread pool and the third detection thread in the REE that are associated through the second SHM. The second SHM includes a second task queue and a second result queue. The second task queue is used to store the I/O requests of the second application. The second worker thread pool includes a plurality of worker threads, and the plurality of worker threads are used to: process the I/O requests in the second task queue, and write obtained request results into the second result queue. In other words, the second result queue is used to store request results of the I/O requests of the second application.

It should be understood that, the method provided in this embodiment of this application is applied to the second xtasklet framework, so that the worker threads in the second worker thread pool in the REE can concurrently process the I/O requests of the second application in the TEE, and efficiency of processing the I/O requests of the second application in the TEE can be improved. In addition, it can be learned that, in this embodiment of this application, corresponding xtasklet frameworks may be created for different TAs in the TEE, and the method provided in this embodiment of this application is applied to an xtasklet framework corresponding to each TA, so that efficiency of processing I/O requests by each TA can be improved. In other words, in this embodiment of this application, concurrent processing of the I/O requests of each TA in the TEE is supported in the REE. Therefore, according to the method provided in this embodiment of this application, efficiency of processing the I/O requests of the TA in the TEE through the REE is improved.

It should be further understood that, for detailed descriptions of creating the second worker thread pool and detailed descriptions of the second worker thread pool, refer to related descriptions of the first worker thread pool. For detailed descriptions of creating the third detection thread and detailed descriptions of the third detection thread, refer to related descriptions of the first detection thread. For detailed descriptions of creating the fourth detection thread and detailed descriptions of the fourth detection thread, refer to related descriptions of the second detection thread. For detailed descriptions of applying for the second SHM, and associating the second application and the fourth detection thread in the TEE with the second worker thread pool and the third detection thread in the REE through the second SHM, refer to the foregoing descriptions of applying for the first SHM, and associating the first application and the second detection thread in the TEE with the first worker thread pool and the first detection thread in the REE through the first SHM. Details are not described again.

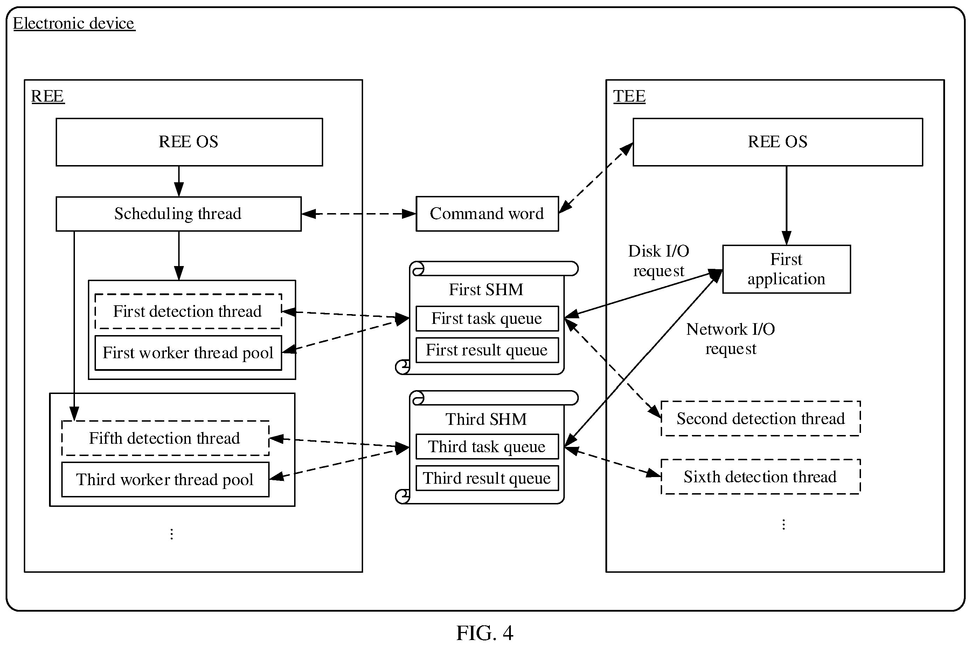

FIG. 4 is a diagram of another software framework of an electronic device according to an embodiment of this application. With reference to FIG. 3, as shown in FIG. 4, when the I/O requests of the first application include disk I/O requests, the first task queue described above is used to store the disk I/O requests of the first application. The worker threads in the first worker thread pool are used to process the disk I/O requests in the first task queue, and write obtained request results into the first result queue. In other words, the first result queue is used to store request results of the disk I/O requests of the first application.

As shown in FIG. 4, when the I/O requests of the first application further include network I/O requests, a third SHM may be applied for the first application in the electronic device, a third worker thread pool and a fifth detection thread are created in the REE, and a sixth detection thread is created in the TEE. The first application and the sixth detection thread in the TEE are associated with the third worker thread pool and the fifth detection thread in the REE through the third SHM, to obtain a third xtasklet framework. In this way, there is a correspondence between the first application and the sixth detection thread in the TEE and the third worker thread pool and the fifth detection thread in the REE that are associated through the third SHM. The third SHM includes a third task queue and a third result queue. The third task queue is used to store the network I/O requests of the first application. The third worker thread pool includes a plurality of worker threads, and the plurality of worker threads are used to: process the network I/O requests in the third task queue, and write obtained request results into the third result queue. In other words, the third result queue is used to store request results of the network I/O requests of the first application.

It should be understood that, the method provided in this embodiment of this application is applied to the third xtasklet framework, so that efficiency of processing the network I/O requests of the first application can be improved. It should be further understood that, for detailed descriptions of creating the third worker thread pool and detailed descriptions of the third worker thread pool, refer to related descriptions of the first worker thread pool. For detailed descriptions of creating the fifth detection thread and detailed descriptions of the fifth detection thread, refer to related descriptions of the first detection thread. For detailed descriptions of creating the sixth detection thread and detailed descriptions of the sixth detection thread, refer to related descriptions of the second detection thread. For detailed descriptions of applying for the third SHM, and associating the first application and the sixth detection thread in the TEE with the third worker thread pool and the fifth detection thread in the REE through the third SHM, refer to the foregoing descriptions of applying for the first SHM, and associating the first application and the second detection thread in the TEE with the first worker thread pool and the first detection thread in the REE through the first SHM. Details are not described again.

It should be further understood that, for the second application shown in FIG. 3, when the I/O requests of the second application include disk I/O requests and network I/O requests, similar to the descriptions in FIG. 4, in this embodiment of this application, two xtasklet frameworks may be created for the second application. The two xtasklet frameworks include the second xtasklet framework in FIG. 3 and another xtasklet framework (denoted as a fourth xtasklet framework).

The second task queue in the second xtasklet framework is used to store the disk I/O requests of the second application. The worker threads in the second worker thread pool in the second xtasklet framework are used to: process the disk I/O requests in the second task queue, and write obtained request results into the second result queue. In other words, the second result queue in the second xtasklet framework is used to store request results of the disk I/O requests of the second application. In this way, the method provided in this embodiment of this application is applied to the second xtasklet framework, so that efficiency of processing the disk I/O requests of the second application in the TEE through the REE can be improved.

The fourth xtasklet framework includes a fourth SHM and a fourth worker thread pool in the REE. The fourth SHM includes a fourth task queue and a fourth result queue, and the fourth task queue is used to store the network I/O requests of the second application. The fourth worker thread pool includes a plurality of worker threads, and the plurality of worker threads are used to: process the network I/O requests in the fourth task queue, and write obtained request results into the fourth result queue. In other words, the fourth result queue is used to store request results of the network I/O requests of the second application. In this way, the method provided in this embodiment of this application is applied to the fourth xtasklet framework, so that efficiency of processing the network I/O requests of the second application in the TEE through the REE can be improved.

It may be understood that xtasklet frameworks are respectively established for different types of I/O requests of each TA in the TEE, so that efficiency of processing different types of I/O requests of the TA in the TEE through the REE can be implemented.

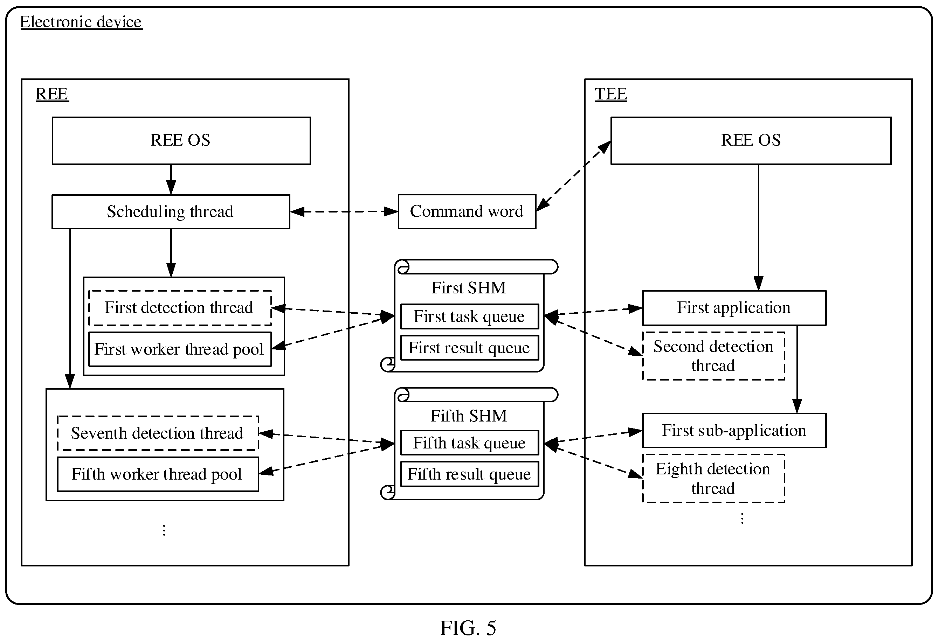

FIG. 5 is a diagram of still another software framework of an electronic device according to an embodiment of this application. With reference to FIG. 3 and/or FIG. 4, when processing a service, the first application shown in FIG. 3 and/or FIG. 4 creates a sub-application based on a service requirement, for example, a first sub-application shown in FIG. 5. As shown in FIG. 5, in this embodiment of this application, when the first sub-application needs to execute I/O requests in a service processing process, a fifth SHM may be applied for the first sub-application in the electronic device, a fifth worker thread pool and a seventh detection thread are created in the REE, and an eighth detection thread is created in the TEE. The first sub-application and the eighth detection thread in the TEE are associated with the fifth worker thread pool and the seventh detection thread in the REE through the fourth SHM, to obtain a fifth xtasklet framework. In this way, there is a correspondence between the first sub-application and the eighth detection thread in the TEE and the fifth worker thread pool and the seventh detection thread in the REE that are associated through the fourth SHM. The fifth SHM includes a fifth task queue and a fifth result queue. The fifth task queue is used to store the I/O requests of the first sub-application. The fifth worker thread pool includes a plurality of worker threads, and the plurality of worker threads are used to: process the I/O requests in the fifth task queue, and write obtained request results into the fifth result queue. In other words, the fifth result queue is used to store request results of the I/O requests of the first sub-application.

It should be understood that, the method provided in this embodiment of this application is applied to the fifth xtasklet framework, so that efficiency of processing the I/O requests of the first sub-application of the first application in the TEE through the REE can be improved. It should be further understood that, for detailed descriptions of creating the fifth worker thread pool and detailed descriptions of the fifth worker thread pool, refer to related descriptions of the first worker thread pool. For detailed descriptions of creating the seventh detection thread and detailed descriptions of the seventh detection thread, refer to related descriptions of the first detection thread. For detailed descriptions of creating the eighth detection thread and detailed descriptions of the eighth detection thread, refer to related descriptions of the second detection thread. For detailed descriptions of applying for the fifth SHM, and associating the first sub-application and the eighth detection thread in the TEE with the fifth worker thread pool and the seventh detection thread in the REE through the fifth SHM, refer to the foregoing descriptions of applying for the first SHM, and associating the first application and the second detection thread in the TEE with the first worker thread pool and the first detection thread in the REE through the first SHM. Details are not described again.

It may be understood that, based on the software framework provided in this embodiment of this application, the foregoing xtasklet framework may be established for each sub-application of any TA in the electronic device TEE, so that I/O requests of each sub-application of any TA in the TEE can be concurrently processed in the REE, and efficiency of processing the I/O requests of each sub-application is improved.

It should be further understood that, after the TA in the TEE executes a specific task for the CA in the REE, the electronic device may delete or destroy the xtasklet framework created for the TA. The first application in FIG. 3, FIG. 4, or FIG. 5 is used as an example. After executing a specific task for the CA in the REE, the first application in the TEE deletes the detection thread used to detect the task queue status and the result queue status that correspond to the first application, and the first application automatically exits or the first application is destroyed. When detecting that the first application exits/the first application is destroyed, the TEE OS sends, to the scheduling thread in the REE, a destruction instruction carrying the ID of the first application (for example, the TEE OS sends the destruction instruction to the scheduling thread in the REE by invoking the command word in the notify data), to instruct the scheduling thread in the REE to destroy/delete the detection thread and the worker thread pool that are created for the first application, and release the SHM applied for the first application. In response, after receiving the destruction instruction carrying the ID of the first application, the scheduling thread in the REE deletes or destroys, in response to the destruction instruction, the detection thread and the worker thread pool that are created for the first application, and releases the SHM applied for the first application. In this way, corresponding resources of the electronic device can be released in time after the first application completes executing the specific task.

It should be understood that the foregoing content is an example description of a software framework of the method provided in this embodiment of this application, and does not constitute a limitation on the software framework of the method. A person of ordinary skill in the art may learn that as a service requirement changes, the software framework of the method may be adjusted based on an application requirement. This is not enumerated in this embodiment of this application.

The following describes an implementation process of the methods provided in embodiments of this application.

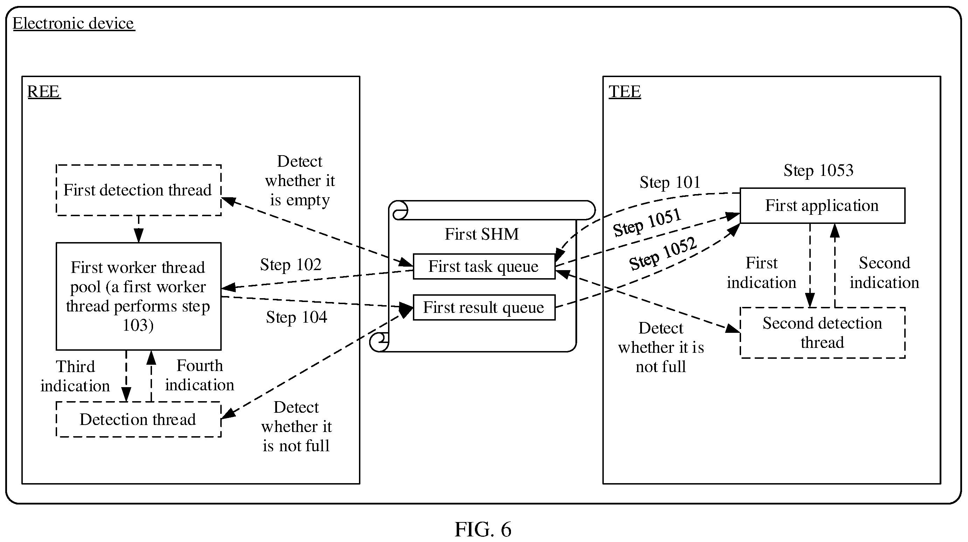

FIG. 6 is a schematic flowchart of an I/O request processing method according to an embodiment of this application. The method may be applied to the software framework shown in FIG. 3, FIG. 4, or FIG. 5.

For brevity of description, the following describes the method provided in this embodiment of this application by using an example in which the TA used to execute the specific task for the CA in the REE of the electronic device is the first application in the TEE shown in FIG. 3, FIG. 4, or FIG. 5, and the electronic device has established the first xtasklet framework for the first application as described above. As shown in FIG. 6, the method includes the following steps.

Step 101: A first application writes I/O requests into a first task queue.

In a process in which the first application in the TEE of the electronic device executes a specific task (with reference to the foregoing description) for the CA in the REE, when the I/O requests need to be executed, the first application writes, into the first task queue, the I/O requests that need to be executed. The first application communicates with the REE of the electronic device through the first task queue and a first result queue in a first SHM, where the first task queue is used to store the I/O requests of the first application, and the first result queue is used to store request results of the I/O requests in the first task queue.

Optionally, with reference to FIG. 4, when the I/O requests of the first application include disk I/O requests, the first application writes the disk I/O requests into the first task queue. When the I/O requests of the first application further include network I/O requests, the first application writes the network I/O requests into a third task queue.

For example, any I/O request that needs to be executed by the first application is a disk I/O request (denoted as a first I/O request). In a case, in a process in which the first application writes the first I/O request into the first task queue, when the first task queue is not full, and a size of a storage space corresponding to a null element in the first task queue is greater than a size of the first I/O request, the first application normally writes the first I/O request into the first task queue. It may be understood that the first task queue includes a plurality of elements, and the elements may correspond to storage spaces of a same size or different sizes. Details are not described in this embodiment of this application.

In another case, in a process in which the first application writes the first I/O request into the first task queue, when the first task queue is full, after the first application performs an operation of writing the first I/O request into the first task queue, the first task queue returns, to the first application, status information indicating that the first task queue is full. In a possible implementation, in response to the status information indicating that the first task queue is full, the first application performs, after preset duration, the operation of writing the first I/O request into the first task queue again. A value of the preset duration is not specifically limited in this embodiment of this application. In another possible implementation, the first application sends a first indication to the second detection thread in response to the status information indicating that the first task queue is full, to indicate the second detection thread to continuously or periodically detect whether the first task queue is not full. Optionally, the first indication includes a size of the I/O request that needs to be written by the first application into the first task queue. Further, when detecting that the first task queue is not full and the storage space corresponding to the null element in the first task queue is greater than the size of the I/O request that needs to be written by the first application into the first task queue, the second detection thread sends a second indication to the first application, to indicate the first application to continue to write the I/O request into the first task queue. Herein, the I/O request that needs to be written by the first application into the first task queue includes but is not limited to the first I/O request. It should be understood that, in a solution in which the second detection thread detects, when the first task queue is full, whether the first task queue is not full, and notifies, when detecting that the first task queue is not full, the first application to continue to write the I/O request into the first task queue, the process/thread that is in the first application and that is used to write the I/O request into the first task queue may process another task in a process of detecting, by the second detection detector, whether the first task queue is not full, and does not need to be suspended to wait. In this way, working efficiency of the process/thread in the first application can be improved.

For example, the second detection thread may detect, based on locations of a head pointer and a tail pointer in the first task queue, whether the first task queue is not full. For example, when the first task queue is a linear queue, if a difference between the head pointer and the tail pointer of the first task queue is equal to a maximum length of the first task queue, it indicates that the first task queue is full. If the difference between the head pointer and the tail pointer of the first task queue is less than the maximum length of the first task queue, it indicates that the first task queue is not full, and an element that is in the first task queue and that is located between the maximum length and the tail pointer is a null element in the first task queue. For another example, when the first task queue is a ring queue, if a difference between the head pointer and the tail pointer of the first task queue is equal to a maximum length of the first task queue, it indicates that the first task queue is full. If the difference between the head pointer and the tail pointer of the first task queue is not equal to the maximum length of the first task queue, it indicates that the first task queue is not full, and an element that is in a reverse direction of the first task queue and that is located between the head pointer and the tail pointer is a null element in the first task queue. The reverse direction of the first task queue is a reverse direction of a head pointer forward direction in a process of writing data into the first task queue, or the reverse direction of the first task queue is a reverse direction of a tail pointer forward direction in a process of consuming data in the first task queue. Further, based on the size of the storage space corresponding to each empty element in the first task queue, the second detection thread may determine whether the size of the storage space corresponding to the null element in the first task queue is greater than the size of the I/O request that needs to be written by the first application into the first task queue, and determine whether the second indication needs to be sent to the first application, to indicate the first application to continue to write the I/O request into the first task queue.

Step 102: The worker threads in the first worker thread pool respectively obtain the I/O requests from the first task queue.

On the REE side of the electronic device, based on a location to which the head pointer of the first task queue points, the worker threads in the first worker thread pool respectively read the I/O requests from the first task queue, to obtain the I/O requests from the first task queue.

In a possible implementation, the worker threads in the first worker thread pool are configured to be in a ready state. In this case, when the first task queue is not empty, the worker threads in the first worker thread pool normally read the I/O requests from the first task queue. When the first task queue is empty, after the worker threads in the first worker thread pool perform the operation of reading the I/O requests from the first task queue, the first task queue returns, to the worker threads that read the I/O request, status information indicating that the first task queue is empty. In response to the status information, the worker threads that read the I/O request read the I/O requests from the first task queue again after preset duration. A value of the preset duration is not specifically limited in this embodiment of this application.

In another possible implementation, the worker threads in the first worker thread pool are used to enter a sleep state when the worker threads do not obtain the I/O requests from the first task queue and process the I/O requests. In other words, the worker thread in the first worker thread pool enters the sleep state when the worker thread is idle, so that occupation of resources (such as a CPU resource and a memory resource) in the electronic device can be reduced. In this case, the scheduling thread in the REE of the electronic device starts the first detection thread after creating the first xtasklet framework. Then, the first detection thread detects whether the first task queue is empty, and indicates, based on a detection result, the worker threads in the first worker thread pool to obtain the I/O requests from the first task queue. For a detailed process, refer to the following descriptions of step 201 to step 205. Details are not described again.

Step 103: For a first I/O request obtained by a first worker thread in the first worker thread pool from the first task queue, the first worker thread executes the first I/O request, to obtain a first request result.

The first worker thread is any worker thread that is in the first worker thread pool corresponding to the first application and that obtains the I/O request, the first I/O request is an I/O request read by the first worker thread, and the first request result is a request result obtained by completing executing the first I/O request by the first worker thread.

Optionally, the first I/O request may be executed by one worker thread. In this case, the first worker thread executes the first I/O request immediately after obtaining the first I/O request.

In an example, when the first I/O request is a disk I/O request for writing data into a disk (for example, a hard disk) of the electronic device, the first worker thread performs an operation of writing data into the disk of the electronic device. In this case, the first request result may be a message indicating that data writing succeeds or fails.

In another example, when the first I/O request is a disk I/O request for reading data from a disk (for example, a hard disk) of the electronic device, the first worker thread performs an operation of reading data from the disk of the electronic device. In this case, the first request result is data read from the disk of the electronic device.

In still another example, when the first I/O request is a network I/O request for sending data to a remote device, the first worker thread sends the to-be-sent data to a communication interface/network interface of the electronic device, to send the data through the communication interface/network interface of the electronic device. In this case, the first request result may be a response message received after the communication interface/network interface of the electronic device sends the data, or a message indicating that the communication interface/network interface of the electronic device successfully sends or fails to send the data. This is not limited herein.

Optionally, when the first I/O request includes a large quantity of I/O subtasks, the first I/O request may also be executed by a plurality of worker threads. In this case, in a process of obtaining the first I/O request and executing the first I/O request, the first worker thread may invoke at least one idle worker thread in the first worker thread pool to execute the subtask of the first I/O request, or create a new worker thread in the first worker thread pool to execute the subtask of the first I/O request, to obtain the request result of the first I/O request. This is not limited herein.

Step 104: The first worker thread writes the first request result into the first result queue.

After obtaining the first request result, the first worker thread writes the first request result into the first result queue.

Optionally, with reference to FIG. 4, when the first I/O request is the disk I/O request, the first worker thread writes the first request result into the first result queue used to store the request result of the disk I/O request. When the first I/O request is the network I/O request, the first worker thread writes the first request result into the third result queue used to store the request result of the network I/O request.

For example, the first worker thread writes the first request result into the first result queue. In a case, in a process in which the first worker thread writes the first request result into the first result queue, when the first result queue is not full, and a size of a storage space corresponding to the null element in the first result queue is greater than a size of the first request result, the first worker thread normally writes the first result request into the first result queue. It should be understood that the first result queue includes a plurality of elements, and the elements may correspond to storage spaces of a same size or different sizes. Details are not described in this embodiment of this application.

In another case, in a process in which the first worker thread writes the first request result into the first result queue, when the first result queue is full, after the first worker process performs an operation of writing the first request result into the first result queue, the first result queue returns, to the first worker thread, status information indicating that the first result queue is full. In a possible implementation, in response to the status information indicating that the first result queue is full, the first worker thread re-performs, after preset duration, the operation of writing the first request result into the first result queue. A value of the preset duration is not specifically limited in this embodiment of this application. In another possible implementation, the first worker thread sends a third indication to the detection thread in response to the status information indicating that the first result queue is full, to indicate the detection thread to continuously or periodically detect whether the first result queue is not full. Optionally, the third indication includes a size of the first request result. Further, when detecting that the first result queue is not full and the storage space corresponding to the null element in the first result queue is greater than the size of the first request result, the detection thread sends a fourth indication to the first worker process, to indicate the first worker process to write the first request result into the first result queue again. For detailed descriptions of detecting, by the detection thread, whether the first result queue is not full, refer to the descriptions of detecting, by the second detection thread in step 101, whether the first task queue is not full. Details are not described again.

It should be understood that, when the first detection thread periodically detects, in step 102, whether the first task queue is empty, the detection thread used to periodically detect, in step 104, whether the first result queue is not full may also be the first detection thread. In this case, a detection period for periodically detecting whether the first result queue is not full only needs to be staggered with a detection period for detecting the first task queue by the first detection thread.

In some examples, the first detection thread may include a first thread and a second thread. In this way, the first thread may be used to detect, in step 102, whether the first task queue is empty, and the second thread may be used to detect, in step 104, whether the first result queue is not full.

Step 105: The first application obtains the first request result of the first I/O request from the first result queue.

A process in which the first application obtains the first request result of the first I/O request from the first result queue includes step 1051 to step 1053.

Step 1051: The first application receives a first ID that is of the first I/O request and that is returned by the first task queue.

The ID of the I/O request written into the first task queue is generated by the first task queue and returned to the first application. The ID of the I/O request is used by the first application to determine a request result of the I/O request from the request result obtained from the first result queue.

It may be understood that after the first application writes the first I/O request into the first task queue in step 101, the first task queue generates the first ID of the first I/O request and returns the first ID to the first application. In response, the first application receives the first ID returned by the first task queue. In this way, the I/O request written by the first application into the first task queue includes a request ID generated by the first task queue for the I/O request.

Step 1052: The first application obtains the request result from the first result queue.

On the TEE side of the electronic device, the first application reads the request result from the first result queue based on a location to which a head pointer points in the first result queue, to obtain the request result from the first result queue.

It should be understood that when the first application corresponds to a plurality of xtasklet frameworks, the first application reads a request result from each result queue based on a location to which a head pointer of a result queue in each xtasklet framework points. With reference to FIG. 4, the first application corresponds to the first xtasklet framework and the third xtasklet framework. In this way, the first application reads the request result from the first result queue based on a location to which the head pointer of the first result queue in the first xtasklet framework points, and the first application reads the request result from the third result queue based on a location to which the head pointer of the third result queue in the third xtasklet framework points.

For brevity of description, the following uses an example in which the first worker thread obtains the first request result from the first result queue for description.

In a case, when the first result queue is not empty, the first application normally reads the request result from the first result queue.

In another case, when the first result queue is empty, in a possible implementation, after the first application performs the operation of reading the request result from the first result queue, the first result queue returns, to the first application, status information indicating that the first result queue is empty. In response to the status information, the first application reads the request result from the first result queue again after preset duration. A value of the preset duration is not specifically limited in this embodiment of this application. In another possible implementation, the first application sends a fifth indication to the detection process in response to the status information indicating that the first result queue is empty, to indicate the detection thread to continuously or periodically detect whether the first result queue is not empty. Further, the detector continuously or periodically detects whether the first result queue is not empty, and when detecting that the first result queue is not empty, the detection thread sends a sixth indication to the first application, to indicate the first application to continue to read the request result from the first result queue. It should be understood that, in a solution in which the detection thread detects, when the first result queue is empty, whether the first result queue is not empty, and when detecting that the first result queue is not empty, notifies the first application to continue to read the request result from the first result queue, the process/thread that is in the first application and that is used to read the request result from the first result queue may process another task in a process of detecting, by the detection thread, whether the first result queue is not empty, and does not need to be suspended to wait. In this way, working efficiency of the process/thread in the first application can be improved.

For example, the detection thread may detect, based on locations of the head pointer and the tail pointer in the first result queue, whether the first result queue is not empty. For example, if the head pointer of the first result queue is not equal to the tail pointer, it indicates that the first result queue is not empty. If the head pointer of the first task queue is equal to the tail pointer, it indicates that the first result queue is empty.

It should be understood that, when the second detection thread periodically detects, in step 101, whether the first task queue is not full, the detection thread used to periodically detect, in step 1052, whether the first result queue is not empty may also be the second detection thread. In this case, a detection period for periodically detecting whether the first result queue is not empty only needs to be staggered with a detection period for detecting the first task queue by the second detection thread.

In some examples, the second detection thread may include a third thread and a fourth thread. In this way, the third thread may be used to detect, in step 101, whether the first task queue is not full, and the fourth thread may be used to detect, in step 1052, whether the first result queue is not empty.

Step 1053: The first application determines, based on the first ID of the first I/O request, the first request result from the request result obtained from the first result queue.

When the first I/O request is written into the first task queue in the first xtasklet framework, the first application determines, based on the first ID, the first request result from the request result obtained from the first result queue in the first xtasklet framework.

Each request result in the first result queue includes an ID of an I/O request from which each request result is obtained. It should be understood that, in step 103, after obtaining any request result, the first worker thread adds, to the request result, an ID of an I/O request from which the request result is obtained, and writes, into the first result queue, the request result including the ID.

Further, when the first application determines that a request result obtained from the first result queue includes the first ID, the first application determines that the request result is the request result of the first I/O request, namely, the first request result.

Then, the first application may execute, based on the first request result, a subsequent procedure of the specific task executed by the first application. Details are not described in this embodiment of this application.

In this way, according to the method described in step 101 to step 105, the I/O request of the TA in the TEE is processed through the xtasklet framework created in the REE and the TEE of the electronic device. In this manner, when the TA needs to execute a plurality of I/O requests, the worker thread pool on the REE side in the xtasklet framework may process these I/O requests in parallel, so that efficiency of processing the I/O requests of the TA on the TEE side through the RER is improved.

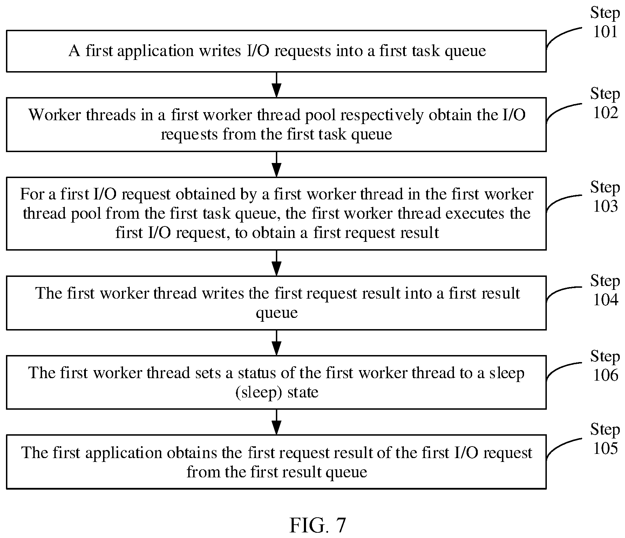

In some embodiments, to reduce occupation of resources (such as a CPU resource and a memory resource) in the electronic device by the worker thread pool on the REE side in the xtasklet framework, with reference to FIG. 6, as shown in FIG. 7, after step 4, the foregoing method further includes step 106.

Step 106: The first worker thread sets a status of the first worker thread to a sleep (sleep) state.

When the first worker process sets the status of the first worker process to the sleep state, it indicates that the first worker process enters the sleep state. For example, the first worker process may enter the sleep state by invoking a sleep() function.

In a possible implementation, after writing the first request result into the first result queue, the first worker thread immediately sets the status of the first worker thread to the sleep state.

In another possible implementation, after writing the first request result into the first result queue, the first worker thread repeatedly performs step 102 to step 104 until the first task queue returns, to the first worker process, the status information indicating that the first task queue is empty when the first worker thread performs step 102, and then the first worker thread immediately sets the status of the first worker thread to the sleep state.

In this way, for idle worker threads that complete processing I/O requests, according to the method in this embodiment of this application, these worker threads enter a sleep state, so that occupation of resources (such as a CPU resource and a memory resource) in the electronic device by the worker threads can be reduced.

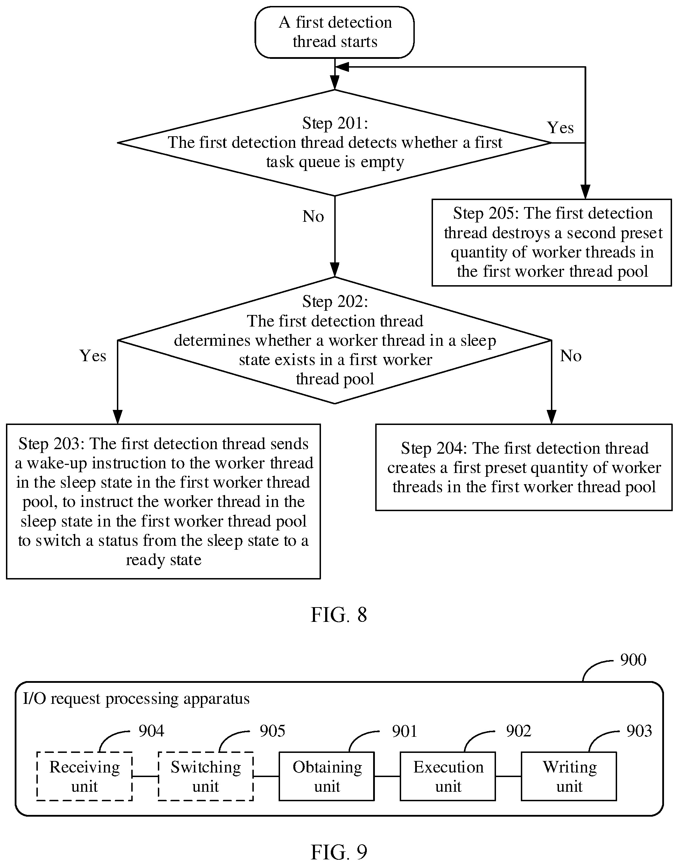

The following describes a detailed process in which "the first detection thread detects whether the first task queue is empty, and indicates, based on the detection result, the worker threads in the first worker thread pool to obtain the I/O requests from the first task queue". FIG. 8 is a diagram of a process in which a worker thread obtains an I/O request from a first task queue according to an embodiment of this application. The process includes the following steps.

Step 201: The first detection thread detects whether the first task queue is empty.

Optionally, after startup, the first detection thread may continuously or periodically detect whether the first task queue is empty. For example, after startup, the first detection thread periodically detects, by using 100 milliseconds as period duration, whether the first task queue is empty. In a process in which the first detection thread periodically detects whether the first task queue is empty, the first detection thread may be in a sleep state during an interval of detecting, in two adjacent periods, whether the first task queue is empty, so that occupation of resources (such as a CPU resource and a memory resource) in the electronic device can be reduced.

For detailed descriptions of detecting, by the first detection thread, whether the first task queue is empty, refer to the descriptions of detecting, by the detection thread, whether the first result queue is not empty in step 1052. Details are not described again.

When the first detection thread detects that the first task queue is empty, the first detection thread continues to repeatedly perform step 201. Optionally, when the first detection thread detects that the first task queue is empty, the first detection thread further performs step 205.

When the first detection thread detects that the first task queue is not empty, the first detection thread performs step 202 to step 204.

Step 202: When detecting that the first task queue is not empty, the first detection thread determines whether a worker thread in a sleep state exists in the first worker thread pool.

When the first detection thread detects that the first task queue is not empty, it indicates that a to-be-processed I/O request exists in the first task queue.

It can be learned from step 106 that the worker threads in the first worker thread pool enter the sleep state when the worker threads complete processing the I/O requests or when the worker threads cannot obtain the I/O requests from the first task queue. In other words, the worker threads in the first worker thread pool are set to the sleep state when the worker threads do not obtain the I/O requests from the first task queue and process the I/O requests. Therefore, the first worker thread pool includes worker threads in two states: worker threads in the sleep state and worker threads processing the I/O request. In this case, after determining that the to-be-processed I/O request exists in the first task queue, the first detection thread further needs to determine whether a worker thread in the sleep state exists in the first worker thread pool.

Specifically, the first detection thread may query status information of each worker thread in the first worker thread pool, to determine whether a worker thread in the sleep state exists in the first worker thread pool.

For example, for the first worker thread in the first worker thread pool, if the first detection thread finds that a value of an element indicating a ready state in the status information of the first worker thread is 1, the first detection thread determines that the status of the first worker thread is the ready state.

For another example, for the second worker thread in the first worker thread pool, if the first detection thread finds that a value of an element indicating a sleep state in the status information of the second worker thread is 1, the first detection thread determines that the status of the second worker thread is the sleep state.

When the first detection thread determines that a worker thread in the sleep state exists in the first worker thread pool, the first detection thread performs step 203.

When the first detection thread determines that no worker thread in the sleep state exists in the first worker thread pool, the first detection thread performs step 204.

Step 203: When determining that a thread in the sleep state exists in the first working pool, the first detection thread sends a wake-up instruction to the worker thread in the sleep state in the first worker thread pool, to instruct the worker thread in the sleep state in the first worker thread pool to switch a status from the sleep state to the ready state.

For example, the first detection thread may send the wake-up instruction to the worker thread in the sleep state in the first worker thread pool by using a pthread function, to instruct the worker thread in the sleep state in the first worker thread pool to switch the state from the sleep state to the ready state.

In response, the worker thread in the sleep state in the first worker thread pool receives the wake-up instruction sent by the first detection thread, and switches the status of the worker thread from the sleep state to the ready state in response to the wake-up instruction. Then, the worker thread whose state is switched to the ready state performs step 102 to step 104 and step 106.

For example, for the first worker thread in the sleep state in the first worker thread pool, the first worker thread receives the wake-up instruction sent by the first detection thread, and switches the status of the first worker thread from the sleep state to the ready state in response to the wake-up instruction. Then, the first worker thread performs step 102 to step 104 and step 106.

Step 204: When determining that no thread in the sleep state exists in the first working pool, the first detection thread creates a first preset quantity of worker threads in the first worker thread pool.

When the first detection thread determines that no thread in the sleep state exists in the first working pool, it indicates that all worker threads in the current first worker thread pool are performing an operation of processing the I/O requests. In this case, to improve efficiency of processing the I/O requests of the first application in the first task queue, the first detection thread creates the first preset quantity of worker threads in the first worker thread pool. Further, the worker thread newly created by the first detection thread performs step 102 to step 104 and step 106. For example, when the first worker thread described above is one of the worker threads newly created by the first detection thread, after the first worker thread is created, the first worker thread performs step 102 to step 104 and step 106.

For example, it is assumed that the first worker thread pool originally includes X worker threads, where X is a positive integer. When the first detection thread determines that no thread in the sleep state exists in the first working pool, it indicates that, in this case, all the X worker threads in the first worker thread pool are performing an operation of processing the I/O request in the first task queue. In this case, the first detection thread creates Z worker threads in the first worker thread pool, where Z is a positive integer. In this way, the first worker thread pool includes X+Z=Y worker threads, and the Y worker threads may all be used to perform step 102 to step 104 and step 106, to improve I/O request processing efficiency.

Step 205: When detecting that the first task queue is empty, the first detection thread destroys a second preset quantity of worker threads in the first worker thread pool.

When the first detection thread detects that the first task queue is empty, or when the first detection thread detects that the first task queue is empty in a preset quantity of consecutive detection periods, it indicates that the first application recently has no I/O request written into the first task queue. The preset quantity is not specifically limited in this embodiment of this application.

In this case, the first detection thread destroys the second preset quantity of worker threads in the first worker thread pool, to release resources (such as a CPU resource or a memory resource) in the electronic device. A value of the second preset quantity is not specifically limited in this embodiment of this application, and the second preset quantity only needs to be less than a quantity of worker threads currently included in the first worker thread pool.

Based on step 201 to step 205, in this embodiment of this application, when no I/O request exists in the first task queue, a redundant worker thread in the first worker thread pool can be destroyed in time, and when the first detection thread detects that an I/O request exists in the first task queue, the worker thread in the sleep state in the first worker thread pool can be woken up to process the I/O request in the first task queue. According to the method, occupation of resources (such as a CPU resource or a memory resource) in the electronic device by the worker thread can be effectively reduced.

In some other embodiments, because frequency of writing the I/O requests into the first task queue by the first application changes with time, to reduce occupation of resources in the electronic device by the first detection thread, in a process of periodically detecting whether the first task queue is empty, the first detection thread may adjust, based on the frequency of writing the I/O requests into the first task queue by the first application, period duration for detecting whether the first task queue is empty. For example, the first detection thread detects the frequency of writing the I/O requests into the first task queue by the first application, to obtain a detection result, and adjusts, based on the detection result, the period duration for detecting the first task queue by the first detection thread.

Optionally, in any detection period for periodically detecting, by the first detection thread, whether the first task queue is empty, the first detection thread may detect, for a third preset quantity of consecutive times, whether the first task queue is empty, to obtain a third preset quantity of detection results. The third preset quantity of detection results may be used to represent the frequency of writing the I/O requests into the first task queue by the first application. Further, the first detection thread adjusts, based on the third preset quantity of detection results, the period duration for detecting the first task queue by the first detection thread. It should be understood that a value of the third preset quantity is not specifically limited in this embodiment of this application (for example, the value of the third preset quantity is 1000). However, time required by the first detection thread to detect whether the first task queue is empty for the third preset quantity of consecutive times is far less than duration of a detection period for detecting, by the first detection thread, whether the first task queue is empty.

In an example, when a quantity of detection results that are in the third preset quantity of detection results and that indicate that the first task queue is not empty exceeds a first threshold, it indicates that the first application writes the I/O requests into the first task queue at high frequency. Therefore, the first detection thread reduces the period duration for detecting, by the first detection thread, whether the first task queue is empty. For example, the first detection thread reduces, based on a first preset step, the period duration for detecting, by the first detection thread, whether the first task queue is empty. A value of the first threshold is not specifically limited in this embodiment of this application. For example, the first threshold may be a natural number less than the third preset quantity, or the first threshold is a preset percentage of the third preset quantity, for example, the first threshold is 5% of the third preset quantity. This is not limited thereto. In addition, a value of the first preset step is not specifically limited in this embodiment of this application. For example, the first preset step is 1 millisecond, 2 milliseconds, 10 milliseconds, or the like. This is not limited thereto.

In another example, when a quantity of detection results that are in the third preset quantity of detection results and that indicate that the first task queue is empty exceeds a second threshold, the first detection thread increases the period duration for detecting, by the first detection thread, whether the first task queue is empty. For example, the first detection thread increases, based on a second preset step, the period duration for detecting, by the first detection thread, whether the first task queue is empty. A value of the second threshold is not specifically limited in this embodiment of this application. For example, the second threshold may be a natural number less than the third preset quantity, or the second threshold is a preset percentage of the third preset quantity, for example, the second threshold is 98% of the third preset quantity. This is not limited thereto. In addition, a value of the second preset step is not specifically limited in this embodiment of this application. For example, the second preset step is 1 millisecond, 2 milliseconds, 10 milliseconds, or the like. This is not limited thereto.

It should be understood that the first preset step and the second preset step may be the same or may be different. This is not limited in this embodiment of this application.

It should be further understood that, to ensure that the first detection thread detects the first task queue, when the first detection thread adjusts, based on the frequency of writing the I/O requests into the first task queue, duration of the detection period for detecting, by the first detection thread, whether the first task queue is empty, the first detection thread sets maximum period duration (for example, 100 milliseconds). When duration of the detection period obtained through adjustment by the first detection thread is equal to the maximum period duration, the first detection thread stops adjusting the duration of the detection period for detecting, by the first detection thread, whether the first task queue is empty.

In this way, the period duration for detecting, by the first detection thread, whether the first task queue is empty is adjusted based on the frequency of writing the I/O requests into the first task queue, so that when the frequency of writing the I/O requests into the first task queue is high, the period duration for detecting, by the first detection thread, whether the first task queue is empty can be reduced, that is, detection frequency of detecting, by the first detection thread, whether the first task queue is empty is increased. In addition, the period duration for detecting, by the first detection thread, whether the first task queue is empty is adjusted based on the frequency of writing the I/O requests into the first task queue, so that when the frequency of writing the I/O requests into the first task queue is low, the period duration for detecting, by the first detection thread, whether the first task queue is empty can be increased, that is, detection frequency of detecting, by the first detection thread, whether the first task queue is empty is reduced. In this way, efficiency of processing the I/O requests in the first task queue can be ensured, and occupation of resources in the electronic device by the first detection thread can be further effectively reduced.

It should be noted that, a sequence of steps of the method provided in embodiments of this application may be appropriately adjusted, and a step may be added or removed based on a situation. Any variation method readily figured out by a person skilled in the art within the technical scope disclosed in this application shall fall within the protection scope of this application. Therefore, details are not described.

The foregoing mainly describes the solutions provided in embodiments of this application from the perspective of the methods.

To implement the foregoing functions, FIG. 9 is a diagram of a structure of an I/O request processing apparatus 900 according to an embodiment of this application. The processing apparatus 900 is used in an electronic device, a first execution environment in the electronic device includes a first worker thread pool, the first worker thread pool communicates, through a first task queue and a first result queue, with a first application that runs in a second execution environment in the electronic device, the first task queue is used to store I/O requests of the first application, the first result queue is used to store request results of the I/O requests, and the first worker thread pool includes a plurality of worker threads used to process the I/O requests in the first task queue. The processing apparatus 900 is configured to perform the foregoing I/O request processing method, for example, is configured to perform a part that is performed in the first execution environment in the electronic device and that is in the method shown in FIG. 6, FIG. 7, or FIG. 8. The processing apparatus 900 may include an obtaining unit 901, an execution unit 902, and a writing unit 903.

The obtaining unit 901 is configured to respectively obtain the I/O requests from the first task queue by using the worker threads in the first worker thread pool. For the first I/O request obtained by the first worker thread from the first task queue, the execution unit 902 is configured to execute the first I/O request by using the first worker thread, to obtain a first request result. The first worker thread is any worker thread that obtains an I/O request and that is in the first worker thread pool. The writing unit 9003 is configured to write the first request result into the first result queue by using the first worker thread.

For example, with reference to FIG. 6 or FIG. 7, the obtaining unit 901 may be configured to perform step 102, the execution unit 902 may be configured to perform step 103, and the writing unit 903 may be configured to perform step 104.

Optionally, the first execution environment in the electronic device further includes a second worker thread pool, and the second worker thread pool communicates with a second application in the second execution environment through a second task queue and a second result queue. The second task queue is used to store I/O requests of the second application, the second result queue is used to store request results of the I/O requests of the second task queue, the second worker thread pool includes a plurality of worker threads, and the worker threads in the second worker thread pool are used to: process the I/O requests in the second task queue, and write obtained results into the second result queue.

Optionally, the first execution environment in the electronic device further includes a detection thread corresponding to the first worker thread pool. In this case, before the obtaining unit 901 respectively obtains the I/O requests from the first task queue by using the worker threads in the first worker thread pool, the processing apparatus 900 further includes: a receiving unit 904, configured to receive, by using a worker thread in a sleep state in the first worker thread pool, a wake-up instruction sent by the detection thread; and a switching unit 905, configured to switch, in response to the wake-up instruction, the worker thread that is in the first worker thread pool and whose state is the sleep state from the sleep state to a ready state. The detection thread is used to: detect whether the first task queue is empty; when detecting that the first task queue is not empty, determine whether a worker thread in the sleep state exists in the first worker thread pool; and when determining that the worker thread in the sleep state exists in the first worker thread pool, send the wake-up instruction to the worker thread in the sleep state in the first worker thread pool. The obtaining unit 901 is specifically configured to separately obtain, by using the worker thread that is in the first worker thread pool and whose state is switched from the sleep state to the ready state, an I/O request from the first task queue.

For example, with reference to FIG. 8, the receiving unit 904 and the switching unit 905 may be configured to respond to step 203.

Optionally, when no worker thread in the sleep state exists in the first worker thread pool, the detection thread is further used to create a first preset quantity of worker threads in the first worker thread pool. The obtaining unit 901 is specifically configured to separately obtain an I/O request from the first task queue by using a newly created worker thread in the first worker thread pool.

Optionally, when the detection thread is used to periodically detect whether the first task queue is empty, the detection thread is further used to detect, in each period, frequency of writing the I/O requests into the first task queue, to obtain a detection result of each period, where the detection result is used to adjust period duration for detecting, by the detection thread, whether the first task queue is empty.

Optionally, the detection thread is further used to: when detecting that the first task queue is empty, destroy a second preset quantity of worker threads that are in the first worker thread pool and that are in the sleep state.

Optionally, after the writing unit 903 writes the first request result into the first result queue by using the first worker thread, or after the writing unit 903 writes the first request result into the first result queue by using the first worker thread, and when the first worker thread obtains, while receiving the status information that is returned by the first task queue and that indicates a queue is empty, the I/O request from the first task queue again by using the first worker thread, the switching unit 905 is further configured to set a status of the first worker thread to the sleep state by using the first worker thread.

For example, with reference to FIG. 7, the switching unit 905 may be configured to perform step 106.

Optionally, the I/O requests of the first application include disk I/O requests. In this case, the first task queue is used to store the disk I/O requests of the first application.

Optionally, the I/O requests of the first application further include network I/O requests. In this case, the first execution environment in the electronic device further includes a third worker thread pool. The third worker thread pool communicates with the first application through a third task queue and a third result queue, the third task queue is used to store the network I/O requests of the first application, the third result queue is used to store request results of the network I/O requests in the third task queue, the third worker thread pool includes a plurality of worker threads, and the worker threads in the third worker thread pool are used to: process the network I/O requests in the third task queue, and write obtained request results into the third result queue.

Optionally, a security level of the first execution environment in the electronic device is different from a security level of the second execution environment.

Optionally, the first execution environment in the electronic device is an REE, and the second execution environment is a TEE.

For detailed descriptions of the foregoing optional implementations, refer to the foregoing method embodiments. Details are not described herein again. In addition, for descriptions of any processing apparatus 900 provided above and descriptions of beneficial effects, refer to the foregoing corresponding method embodiments. Details are not described again.

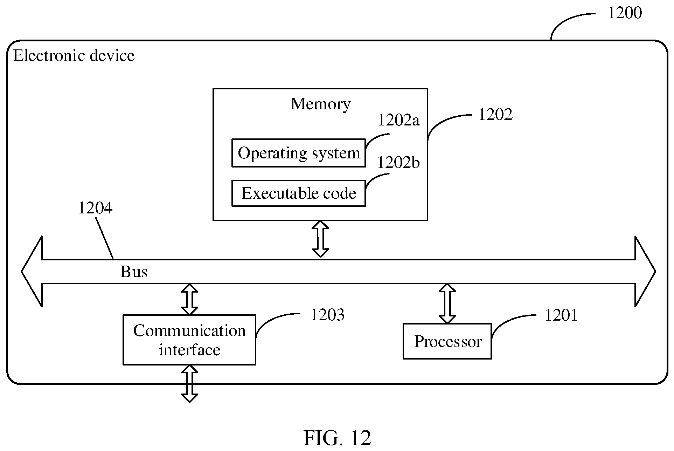

For example, with reference to FIG. 12 described below, functions implemented by the obtaining unit 901, the execution unit 902, the writing unit 903, and the switching unit 905 in the processing apparatus 900 may be implemented by a processor 1201 in FIG. 12 by executing program code in a memory 1202 in FIG. 12. Functions implemented by the receiving unit 904 may be implemented by an internal interface in a communication interface 1203 shown in FIG. 12.

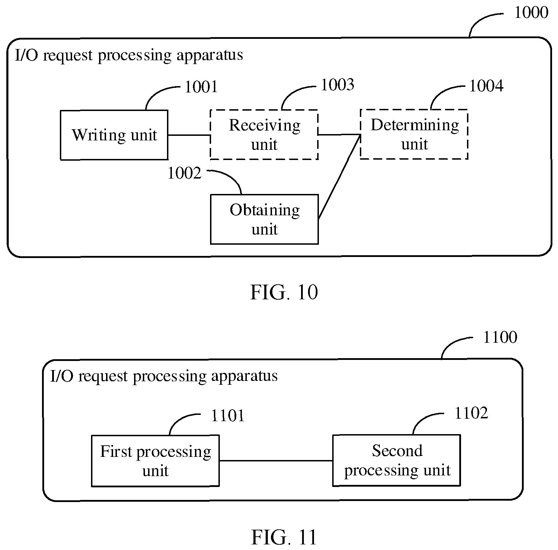

FIG. 10 is a diagram of a structure of another I/O request processing apparatus 1000 according to an embodiment of this application. The processing apparatus 1000 is used in an electronic device, a first application runs in a second execution environment in the electronic device, the first application communicates with a first execution environment in the electronic device through a first task queue and a first result queue, the first task queue is used to store I/O requests of the first application, and the first result queue is used to store request results of the I/O requests in the first task queue. The processing apparatus 1000 is configured to perform the foregoing I/O request processing method, for example, is configured to perform a part that is performed in the second execution environment in the electronic device and that is in the method shown in FIG. 6, FIG. 7, or FIG. 8. The processing apparatus 1000 may include a writing unit 1001 and an obtaining unit 1002.

The writing unit 1001 is configured to write a first I/O request into the first task queue by using the first application, where the first I/O request is any I/O request written by the first application into the first task queue. The obtaining unit 1002 is configured to obtain a first request result of the first I/O request from the first result queue by using the first application, where the first request result is a request result obtained after a worker thread pool that is in the first execution environment and that corresponds to the first application processes the first I/O request.

For example, with reference to FIG. 6 or FIG. 7, the writing unit 1001 may be configured to perform step 101, and the obtaining unit 1002 may be configured to perform step 105.

Optionally, a second application further runs in the second execution environment in the electronic device. The second application communicates with the first execution environment through a second task queue and a second result queue, the second task queue is used to store I/O requests of the second application, the second result queue is used to store request results of the I/O requests in the second task queue, and the request results are request results obtained after worker threads in a worker thread pool that is in the first execution environment and that corresponds to the second application process the I/O requests in the second task queue.

Optionally, the I/O requests of the first application include disk I/O requests. In this case, the first task queue is used to store the disk I/O requests of the first application.

Optionally, the I/O requests of the first application further include network I/O requests. In this case, the first application further communicates with the first execution environment through a third task queue and a third result queue. The third task queue is used to store the network I/O requests of the first application, the third result queue is used to store request results of the network I/O requests in the third task queue, and the request results are request results obtained after the worker threads in the worker thread pool that is in the first execution environment and that corresponds to the first application process the I/O requests in the third task queue.

Optionally, a security level of the first execution environment in the electronic device is different from a security level of the second execution environment.

Optionally, the first execution environment in the electronic device is an REE, and the second execution environment is a TEE.

Optionally, after the writing unit 1001 writes the first I/O request into the first task queue by using the first application, the processing apparatus 1000 further includes: a receiving unit 1003, configured to receive a first ID that is of the first I/O request and that is returned by the first task queue; and a determining unit 1004, configured to determine, as the first request result, a request result that is in the request result obtained from the first result queue and that includes the first ID. Each request result in the first result queue includes an ID of an I/O request from which each request result is obtained.

For example, with reference to FIG. 6, the receiving unit 1003 may be configured to perform step 1051, and the determining unit 1004 may be configured to perform step 1053.

For detailed descriptions of the foregoing optional implementations, refer to the foregoing method embodiments. Details are not described herein again. In addition, for descriptions of any processing apparatus 1000 provided above and descriptions of beneficial effects, refer to the foregoing corresponding method embodiments. Details are not described again.

For example, with reference to FIG. 12 described below, functions implemented by the writing unit 1001, the obtaining unit 1002, and the determining unit 1004 in the processing apparatus 1000 may be implemented by the processor 1201 in FIG. 12 by executing the program code in the memory 1202 in FIG. 12. Functions implemented by the receiving unit 1003 may be implemented by an internal interface in a communication interface 1203 shown in FIG. 12.

FIG. 11 is a diagram of a structure of still another I/O request processing apparatus 1100 according to an embodiment of this application. The processing apparatus 1100 is configured to perform the foregoing I/O request processing method, for example, is configured to perform the method shown in FIG. 6, FIG. 7, or FIG. 8. The processing apparatus 1100 includes a first processing unit 1101 and a second processing unit 1102.

The first processing unit 1101 is configured to run a first execution environment, and is configured to perform the I/O request processing method described above, for example, is configured to perform a part that is performed in the first execution environment and that is in the method shown in FIG. 6, FIG. 7, or FIG. 8. The second processing unit 1102 is configured to run a second execution environment, and is configured to perform the I/O request processing method described above, for example, is configured to perform a part that is performed in the second execution environment and that is in the method shown in FIG. 6, FIG. 7, or FIG. 8.

Optionally, a security level of the first execution environment in the electronic device is different from a security level of the second execution environment.

Optionally, the first execution environment in the electronic device is an REE, and the second execution environment is a TEE.

For detailed descriptions of the foregoing optional implementations, refer to the foregoing method embodiments. Details are not described herein again. In addition, for descriptions of any processing apparatus 1100 provided above and descriptions of beneficial effects, refer to the foregoing corresponding method embodiments. Details are not described again.

A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be noted that, division into modules/units in FIG. 9, FIG. 10, and FIG. 11 is an example, and is merely logical function division. During actual implementation, there may be another division manner. For example, two or more functions may be integrated into one processing module. The integrated module may be implemented in a form of hardware, or may be implemented in a form of a software functional module.

An embodiment of this application provides an electronic device. The electronic device is configured to implement some or all functions of the method provided in embodiments of this application. In this embodiment of this application, the electronic device runs a first execution environment and a second execution environment, and a security level of the first execution environment is different from a security level of the second execution environment. In some examples, the first execution environment is an REE, and the second execution environment is a TEE. The electronic device running the first execution environment and the second execution environment performs the method described above in embodiments of this application, so that efficiency of processing I/O requests by an application in the second execution environment in the electronic device through the first execution environment can be improved.

FIG. 12 is a diagram of a structure of an electronic device according to an embodiment of this application. As shown in FIG. 12, the electronic device 1200 includes a processor 1201, a memory 1202, a communication interface 1203, and a bus 1204. The processor 1201, the memory 1202, and the communication interface 1203 are in communication connection with each other through the bus 1204.

The processor 1201 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field programmable gate array (field programmable gate array, FPGA), or a network processor (network processor, NP). The processor 1201 may be an integrated circuit chip and has a signal processing capability. In an implementation process, some or all functions of the method in this application may be implemented by using an integrated logic circuit of hardware in the processor 1201 or instructions in a form of software.

The memory 1202 is configured to store a computer program, and the computer program includes an operating system 1202a and executable code (namely, program instructions) 1202b. For example, the memory 1202 is a read-only memory or another type of static storage device that can store static information and instructions, a random access memory or another type of dynamic storage device that can store information and instructions, an electrically erasable programmable read-only memory, a compact disc read-only memory or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected executable code in a form of instructions or a data structure and that can be accessed by a computer. This is not limited thereto. For example, the memory 1202 is configured to store I/O requests, request results of the I/O requests, and the like. For example, the memory 1202 exists independently, and is connected to the processor 1201 through the bus 1204. Alternatively, the memory 1202 is integrated with the processor 1201. The memory 1202 may store the executable code. When the executable code stored in the memory 1202 is executed by the processor 1201, the processor 1201 is configured to perform some or all functions of the method provided in embodiments of this application. For an implementation in which the processor 1201 performs this process, correspondingly refer to related descriptions in the foregoing embodiments. The memory 1202 may further include a software module, data, and the like that are needed by another running process like the operating system.

The communication interface 1203 uses a transceiver module, for example, but not limited to a transceiver, to implement communication with another device or a communication network. For example, the communication interface 1203 may be any one or any combination of the following components having a network access function: a network interface (for example, an ethernet interface) or a wireless network interface card.

The communication interface 1203 further includes a hardware or software interface configured to implement communication between component modules in the electronic device 1200. This type of interface may be referred to as an internal interface used for communication in the electronic device 1200.

The bus 1204 is any type of communication bus configured to implement interconnection between internal components (for example, the memory 1202, the processor 1201, and the communication interface 1203) in the electronic device, for example, a system bus. In this embodiment of this application, an example in which the foregoing components in the electronic device are interconnected through the bus 1204 is used for description. Optionally, the foregoing components in the electronic device 1200 may be communicatively connected to each other in another connection manner other than the bus 1204. For example, the foregoing components in the electronic device 1200 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Embodiments of this application impose no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented through software, hardware, firmware, or any combination thereof. When software is used to implement the foregoing embodiments, all or some of the foregoing embodiments may be implemented in a form of a computer program product. The computer program product that provides a program development platform includes one or more computer instructions. When these computer program instructions are loaded and executed on the electronic device, some or all of the functions of some or all of the methods provided in embodiments of this application are implemented.

In addition, the computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a computer-readable storage medium. The computer-readable storage medium is a non-volatile computer-readable storage medium, and the computer-readable storage medium includes program instructions. When the program instructions are run on a computer, a computer system, or a processor, the computer, the computer system, or the processor is enabled to perform the method provided in embodiments of this application.

An embodiment of this application further provides a computer program product including instructions. When the computer program product is run on a computer, a computer system, or a processor, the computer, the computer system, or the processor is enabled to perform the method provided in embodiments of this application.

A person of ordinary skill in the art may understand that all or some of the steps in the foregoing embodiments may be implemented by using hardware or by using a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

An embodiment of this application further provides a chip. The chip includes a processor, the processor runs the first execution environment and the second execution environment described above, and is configured to perform the I/O request processing method described above, for example, the method shown in FIG. 6, FIG. 7, or FIG. 8.

For example, the chip further includes an input interface, an output interface, and a memory. The input interface, the output interface, the processor, and the memory are connected through an internal connection path. The memory is configured to store the foregoing program instructions or code, and is configured to store the foregoing I/O requests and the request results of the I/O requests.

In embodiments of this application, the terms "first", "second", "third" are merely used for a description purpose, but shall not be understood as an indication or implication of relative importance. The term "at least one" means one or more, and the term "a plurality of" means a plurality, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be understood that determining B based on A does not mean that B is determined based only on A, and B may alternatively be determined based on A and/or other information.

It should be further understood that the term "include" (also referred to as "includes", "including", "comprises", and/or "comprising") used in this specification specifies presence of the stated features, integers, steps, operations, elements, and/or components, but does not exclude presence or addition of one or more other features, integers, steps, operations, elements, components, and/or groups thereof.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The foregoing descriptions are merely optional embodiments of this application, but are not intended to limit this application. Any modification, equivalent replacement, improvement, or the like made within the concept and principle of this application shall fall within the protection scope of this application.

## Claims

1. An input/output I/O request processing method, applied to an electronic device, wherein a first execution environment in the electronic device comprises a first worker thread pool, the first worker thread pool communicates, through a first task queue and a first result queue, with a first application that runs in a second execution environment in the electronic device, the first task queue is used to store I/O requests of the first application, the first result queue is used to store request results of the I/O requests, and the first worker thread pool comprises a plurality of worker threads used to process the I/O requests in the first task queue; and the method comprises:
respectively obtaining, by the worker threads in the first worker thread pool, the I/O requests from the first task queue;
for a first I/O request obtained by a first worker thread from the first task queue, executing, by the first worker thread, the first I/O request, to obtain a first request result, wherein the first worker thread is any worker thread that obtains an I/O request and that is in the first worker thread pool; and
writing, by the first worker thread, the first request result into the first result queue.

2. The method according to claim 1, wherein the first execution environment further comprises a second worker thread pool, the second worker thread pool communicates with a second application in the second execution environment through a second task queue and a second result queue, the second task queue is used to store I/O requests of the second application, the second result queue is used to store request results of the I/O requests of the second task queue, the second worker thread pool comprises a plurality of worker threads, and the worker threads in the second worker thread pool are used to: process the I/O requests in the second task queue, and write obtained results into the second result queue.

3. The method according to claim 1 or 2, wherein the first execution environment further comprises a detection thread corresponding to the first worker thread pool, and before respectively obtaining, by the worker threads in the first worker thread pool, the I/O requests from the first task queue, the method further comprises:
receiving, by a worker thread that is in the first worker thread pool and whose state is a sleep state, a wake-up instruction sent by the detection thread; and
switching, by the worker thread that is in the first worker thread pool and whose state is the sleep state, from the sleep state to a ready state in response to the wake-up instruction, wherein
the detection thread is used to: detect whether the first task queue is empty; when detecting that the first task queue is not empty, determine whether a worker thread in the sleep state exists in the first worker thread pool; and when determining that the worker thread in the sleep state exists in the first worker thread pool, send the wake-up instruction to the worker thread in the sleep state in the first worker thread pool; and
respectively obtaining, by the worker threads in the first worker thread pool, the I/O requests from the first task queue comprises:
separately obtaining, by the worker thread that is in the first worker thread pool and whose state is switched from the sleep state to the ready state, an I/O request from the first task queue.

4. The method according to claim 3, wherein when no worker thread in the sleep state exists in the first worker thread pool, the detection thread is further used to create a first preset quantity of worker threads in the first worker thread pool; and respectively obtaining, by the worker threads in the first worker thread pool, the I/O requests from the first task queue comprises:
separately obtaining, by a newly created worker thread in the first worker thread pool, an I/O request from the first task queue.

5. The method according to claim 3 or 4, wherein when the detection thread is used to periodically detect whether the first task queue is empty, the detection thread is further used to detect, in each period, frequency of writing the I/O requests into the first task queue, to obtain a detection result of each period, wherein the detection result is used to adjust period duration for detecting, by the detection thread, whether the first task queue is empty.

6. The method according to claim 3, wherein the detection thread is further used to: when detecting that the first task queue is empty, destroy a second preset quantity of worker threads that are in the first worker thread pool and that are in the sleep state.

7. The method according to any one of claims 1 to 6, wherein after the first worker thread writes the first request result into the first result queue, or after the first worker thread writes the first request result into the first result queue and when the first worker thread obtains, while receiving status information that is returned by the first task queue and that indicates that the queue is empty, the I/O request from the first task queue again, the method further comprises:
setting, by the first worker thread, a status of the first worker thread to the sleep state.

8. The method according to any one of claims 1 to 7, wherein the I/O requests of the first application comprise disk I/O requests, and the first task queue is used to store the disk I/O requests.

9. The method according to claim 8, wherein the I/O requests of the first application further comprise network I/O requests, the first execution environment further comprises a third worker thread pool, the third worker thread pool communicates with the first application through a third task queue and a third result queue, the third task queue is used to store the network I/O requests, the third result queue is used to store request results of the network I/O requests in the third task queue, the third worker thread pool comprises a plurality of worker threads, and the worker threads in the third worker thread pool are used to: process the network I/O requests in the third task queue, and write obtained request results into the third result queue.

10. The method according to any one of claims 1 to 9, wherein a security level of the first execution environment is different from a security level of the second execution environment.

11. The method according to any one of claims 1 to 10, wherein the first execution environment is a rich execution environment REE, and the second execution environment is a trusted execution environment TEE.

12. An input/output I/O request processing method, applied to an electronic device, wherein a first application runs in a second execution environment in the electronic device, the first application communicates with a first execution environment in the electronic device through a first task queue and a first result queue, the first task queue is used to store I/O requests of the first application, and the first result queue is used to store request results of the I/O requests in the first task queue; and the method comprises:
writing, by the first application, a first I/O request into the first task queue, wherein the first I/O request is any I/O request written by the first application into the first task queue; and
obtaining, by the first application, a first request result of the first I/O request from the first result queue, wherein the first request result is a request result obtained after a worker thread pool that is in the first execution environment and that corresponds to the first application processes the first I/O request.

13. The method according to claim 12, wherein a second application further runs in the second execution environment, the second application communicates with the first execution environment through a second task queue and a second result queue, the second task queue is used to store I/O requests of the second application, the second result queue is used to store request results of the I/O requests in the second task queue, and the request results are request results obtained after worker threads in a worker thread pool that is in the first execution environment and that corresponds to the second application process the I/O requests in the second task queue.

14. The method according to claim 12 or 13, wherein the I/O requests of the first application comprise disk I/O requests, and the first task queue is used to store the disk I/O requests.

15. The method according to claim 14, wherein the I/O requests of the first application further comprise network I/O requests, the first application further communicates with the first execution environment through a third task queue and a third result queue, the third task queue is used to store the network I/O requests, the third result queue is used to store request results of the network I/O requests in the third task queue, and the request results are request results obtained after the worker threads in the worker thread pool that is in the first execution environment and that corresponds to the first application process the I/O requests in the third task queue.

16. The method according to any one of claims 12 to 15, wherein a security level of the first execution environment is different from a security level of the second execution environment.

17. The method according to any one of claims 12 to 16, wherein the first execution environment is a rich execution environment REE, and the second execution environment is a trusted execution environment TEE.

18. The method according to any one of claims 12 to 17, wherein after writing, by the first application, the first I/O request into the first task queue, the method further comprises:
receiving a first identifier ID that is of the first I/O request and that is returned by the first task queue; and
obtaining, by the first application, the first request result of the first I/O request from the first result queue comprises:
determining, as the first request result, a request result that is in the request result obtained from the first result queue and that comprises the first ID, wherein each request result in the first result queue comprises an ID of an I/O request from which each request result is obtained.

19. An input/output I/O request processing apparatus, comprising:
a first processing unit, configured to: run a first execution environment, and perform the method according to any one of claims 1 to 11; and
a second processing unit, configured to: run a second execution environment, and perform the method according to any one of claims 12 to 18.

20. The apparatus according to claim 19, wherein a security level of the first execution environment is different from a security level of the second execution environment.

21. The apparatus according to claim 19 or 20, wherein the first execution environment is a rich execution environment REE, and the second execution environment is a trusted execution environment TEE.

22. An electronic device, comprising one or more processors and a memory, wherein the one or more processors are configured to read a first program instruction in the memory, to run a first execution environment, and perform the method according to any one of claims 1 to 11; and the one or more processors are further configured to read a second program instruction in the memory, to run a second execution environment, and perform the method according to any one of claims 12 to 18.

23. A computer-readable storage medium, wherein the computer-readable storage medium comprises program instructions, and when the program instructions are run on a computer or a processor, the computer or the processor is enabled to perform the method according to any one of claims 1 to 18.

24. A computer program product comprising instructions, wherein when the instructions are run by a compute device, the compute device is enabled to perform the method according to any one of claims 1 to 18.
